# EUROPEAN PATENT APPLICATION

(11) **EP 4 213 016 A1**
(43) Date of publication of application: **19.07.2023**
(21) Application number: 21874456.3
(22) Date of filing: 28.09.2021
(51) Int. Cl.: G06F 9/455

(54) **CLOUD PLATFORM AND CLOUD PLATFORM-BASED PROGRAM CODE PROCESSING METHOD**

(30) Priority: 30.09.2020 CN 202011063410; 13.04.2021 CN 202110394141
(71) Applicant: Huawei Cloud Computing Technologies Co., Ltd., Guizhou 550025 (CN)
(72) Inventor: CHEN, Pu, Shenzhen, Guangdong 518129 (CN)
(74) Representative: Gill Jennings & Every LLP
(86) International application number: PCT/CN2021/121245
(87) International publication number: WO 2022/068796

(57) **Abstract**

This application provides a cloud platform and a cloud service-based program code processing method. The method includes the following steps: The cloud platform may receive program code of a tenant, and process the program code. The method specifically includes the following steps: A cloud platform obtains program code of a tenant, where the program code includes a first tag and subroutine code, and the first tag is used to indicate configuration information of a virtual instance running the subroutine code; the cloud platform creates or selects one or more first virtual instances based on the first tag; the cloud platform separately sends the subroutine code to the one or more first virtual instances; and the cloud platform receives a first running result obtained by separately running the subroutine code by the one or more first virtual instances. According to the foregoing manner, experience of a programmer in using cloud resources for program development can be improved.

## Description

### TECHNICAL FIELD

This application relates to the field of cloud technologies, and in particular, to a cloud platform and a cloud platform-based program code processing method.

### BACKGROUND

Currently, cloud computing becomes increasingly popular, and is an inevitable trend of future information technology development. A cloud computing service is a basic cloud service provided by a cloud service provider, and a tenant may use the basic cloud service through the internet. For example, the cloud service provider configures a server in a cloud data center operated by the cloud service provider, and the tenant may obtain a remote use permission of a virtual machine in a specific specification in the server by paying to the cloud service provider, to use the basic cloud service. The cloud service is not limited to the virtual machine, and may also include an object storage service, a database service, a security service, and a face recognition service. The cloud computing service enables the tenant to skip a tedious server configuration process and obtain, by paying, the basic cloud service provided by the cloud service provider.

Due to popularity of cloud computing, a programmer may also use, in a process of developing a large-scale computing program, a computing capability provided by the cloud service. For example, the programmer may separately set a plurality of virtual machines, separately write program code pre-split by the programmer into the plurality of virtual machines, and enable the plurality of virtual machines to separately run the program code. Finally, the programmer collects running results of the program code in the plurality of virtual machines, to run the large-scale computing program by using the computing capability provided by the cloud service. For example, Hadoop and Spark in a MapReduce architecture are good manners for completing large-scale computing.

However, currently, a method for completing large-scale computing by using the cloud service is still complex in use. The tenant needs to log in to a cloud platform. The tenant inputs, on an interface provided by the cloud platform, a configuration of a required virtual machine to create a virtual machine, logs in to the created virtual machine, and sets the virtual machine to run specific program code, resulting in poor user experience.

### SUMMARY

This application provides a cloud platform and a cloud platform-based program code processing method, which can improve experience of a programmer in using cloud resources for program development.

According to a first aspect, this application provides a cloud service-based program code processing method. A cloud platform may receive program code of a tenant, and process the program code. The method specifically includes the following steps: A cloud platform obtains program code of a tenant, where the program code includes a first tag and subroutine code, and the first tag is used to indicate configuration information of a virtual instance running the subroutine code; the cloud platform creates or selects one or more first virtual instances based on the first tag; the cloud platform separately sends the subroutine code to the one or more first virtual instances; and the cloud platform receives a first running result obtained by separately running the subroutine code by the one or more first virtual instances.

When writing the program code, the tenant may set, in the program code, the first tag used to indicate the configuration information of the virtual instance running the subroutine code. The cloud platform obtains the program code. The cloud platform creates or selects, based on the first tag, at least one virtual instance to run the subroutine code, and receives the first running result obtained by running the subroutine code by the at least one virtual instance. Therefore, the tenant can add a tag in the program code, to indicate the cloud platform to create a corresponding virtual instance and run the subroutine code, cloud resources can be effectively used to run the subroutine code without changing an existing programming habit, and user experience can be improved.

In addition, the tenant does not need to log in to the first virtual instance, and the first virtual instance is configured by the cloud platform in the background, which can further improve user experience.

The tag is further used to separate different subroutine code, so that the cloud platform determines the different subroutine code based on the tag.

Optionally, the configuration information includes a virtual instance specification.

The virtual instance specification includes a processor core number, a primary frequency amplitude of a processor, and a memory size that are of the virtual instance.

In a programming process, the tenant adds a tag in the program code, and sets a specification of a to-be-created virtual instance in the configuration information indicated by the tag. When a computing capability required for running the subroutine code is high, the virtual instance specification may be set as a high specification; or when the computing capability required for running the subroutine code is low, the virtual instance specification may be set as a low specification, thereby achieving a technical effect of flexibly using cloud resources to run the subroutine code. Because the virtual instance specification is in direct proportion to a sale price of the virtual instance, the tenant can also properly set, by setting a tag, a virtual instance specification based on cloud resource computing power required by the tenant, thereby effectively reducing costs of purchasing cloud resources from the cloud platform.

Optionally, the configuration information includes a virtual instance type, and the virtual instance type is used to indicate any one of a virtual machine, a container, and a bare metal server.

In the programming process, the tenant adds a tag in the program code, and sets a type of a to-be-created virtual instance in configuration information indicated by the tag, and the type is, for example, the virtual machine, the container, or the bare metal server, thereby achieving a technical effect of flexibly using cloud resources to run the subroutine code. Because different virtual instance types, for example, the virtual machine, the container, and the bare metal server, have different sale prices, the tenant can also properly select, by setting a tag, a virtual instance type based on cloud resource computing power required by the tenant, thereby effectively reducing costs of purchasing cloud resources from the cloud platform.

For large-scale computing, the tenant may select the virtual machine or the bare metal server. These two virtual instances run stably. For small-scale computing, the tenant may select the container.

Optionally, the configuration information includes a virtual instance number N, where N is a positive integer.

In the programming process, the tenant adds a tag in the program code, and sets a number of to-be-created virtual instances in configuration information indicated by the tag. The number is used to indicate a number of virtual instances running the subroutine code. When N is set as a complex number, the subroutine code runs in a plurality of virtual instances. For a big data scenario, parallel computing is an important data processing method. The tenant may tag, in the program code, a number of virtual instances running specific subroutine code, so that the plurality of virtual instances run the subroutine code in parallel. Therefore, the cloud platform can provide a parallel programming capability for the tenant.

Optionally, there are a plurality of first virtual instances, and the subroutine code is used to indicate the plurality of first virtual instances to respectively obtain different to-be-processed data from a shared storage space and respectively perform data processing on the obtained to-be-processed data.

Based on a scenario in which the plurality of virtual instances run the subroutine code in parallel, the tenant writes the subroutine code, so that the subroutine code is used to indicate the plurality of first virtual instances to respectively obtain the different to-be-processed data from the shared storage space and respectively perform data processing on the obtained to-be-processed data. Therefore, the plurality of first virtual instances can run same subroutine code for the different to-be-processed data to implement same program logic and implement parallel computing.

Optionally, the program code further includes nested program code and a second tag, the second tag is used to indicate configuration information of a virtual instance running the nested program code, and the nested program code is invoked by the subroutine code. The method further includes the following steps: The cloud platform creates or selects one or more second virtual instances based on the second tag, and sends the nested program code to the one or more second virtual instances; and the cloud platform receives a second running result obtained by separately running the nested program code by the one or more second virtual instances, and sends the second running result to the first virtual instance.

In this implementation, when the subroutine code invokes another piece of subroutine code, the another piece of subroutine code is referred to the nested program code. The second tag indicates the configuration information of the virtual instance running the nested program code. The cloud platform creates or selects the one or more second virtual instances based on the configuration information indicated by the second tag, sends the nested program code to the one or more second virtual instances for running, and sends the second running result obtained through running to the first virtual instance. Therefore, in this implementation, when subroutine code nesting exists, the cloud platform obtains the running result from the virtual instance running the nested program code, and sends the running result to the virtual instance that runs the subroutine code invoking the nested program code, so that the running result of the nested program code can reach the first virtual instance, and the first virtual instance continues running the subroutine code based on the running result, thereby implementing program code nesting.

Optionally, the program code further includes main program code, and the subroutine code is invoked by the main program code. The method further includes the following steps: The cloud platform requests the first running result from the one or more first virtual instances when running the main program code to a location at which the subroutine code needs to be invoked; and the cloud platform continues running the main program code based on the first running result.

In this implementation, the cloud platform directly runs the main program code; and when running the main program code to the location at which the subroutine code is to be invoked, the cloud platform does not run the subroutine code, but requests the first running result from the first virtual instance running the subroutine code, and continues running the main program code based on the first running result obtained by the request. The cloud platform directly runs the main program code and communicates with the virtual instance running the subroutine code, so that the entire process of invoking the subroutine code by the main program code can be implemented, thereby ensuring that a programming habit of the tenant remains unchanged.

Optionally, the method further includes the following steps: The cloud platform provides an upload interface, where the upload interface is configured to receive the program code uploaded by the tenant; or the cloud platform provides a program editing screen, where the program editing screen is configured to receive the program code remotely input by the tenant.

In this implementation, after locally writing the program code, the tenant may upload the program code to the cloud platform through the upload interface, or the tenant may directly remotely input the program code on the program editing screen provided by the cloud platform, to implement online programming on the cloud platform.

The foregoing two manners may be simultaneously provided to the tenant, and the tenant may select one manner based on a programming habit of the tenant, to further improve user experience.

Optionally, the method further includes the following steps: The cloud platform provides a cloud service, and sets a cloud service application programming interface API for the cloud service, where the cloud service API is set in the subroutine code, and the cloud service API is configured to invoke the cloud service provided by the cloud platform.

In this implementation, when writing the subroutine code, the tenant may invoke the cloud service API provided by the cloud platform, to fully use cloud resources provided by the cloud service.

Optionally, the cloud service API includes one or any combination of an object storage service API, a database service API, a shared cache service API, and a message queue service API.

Optionally, the first tag and the second tag are annotations of the subroutine code, or the first tag and the second tag each are program code that uses a predetermined syntax and that is adjacent to the subroutine code.

In this implementation, the first tag and the second tag may be set as the annotations of the subroutine code, for example, before or after the program code, being @, \\, \, /, //, or another symbol tag pre-agreed with the cloud platform, and configuration information such as a type, a specification, and a number that are of the virtual instance is input in a predetermined format after the symbol. When detecting the symbol, the cloud platform creates a virtual instance based on the type, the specification, and the number that are of the virtual instance indicated after the symbol, and sends the subroutine code to the virtual instance for running. Through the annotation, a programming habit of the tenant does not need to be changed, and the tenant only needs to input the symbol before or after the subroutine code and input the configuration information after the symbol, so as to run the subroutine code by using the virtual instance on a cloud side.

The first tag and the second tag each may be set as the program code that uses the predetermined syntax and that is adjacent to the subroutine code. For example, the cloud platform agrees to use a function creatvirtualinstance (type,spec,N) of the predetermined syntax as the tag. In this case, in a process of writing the program code, the tenant may invoke creatvirtualinstance (type,spec,N) at an adjacent location of the subroutine code (that is, a location before or after the subroutine), and input one or any combination of a type type, a specification spec, and a number N that are of a virtual instance based on a requirement of the tenant. That is, the subroutine code may be tagged, so that the subroutine code runs in a virtual instance created or selected by the cloud platform based on one or any combination of the type type, the specification spec, and the number N.

According to a second aspect, this application provides a cloud service-based program code processing method, including the following method: A cloud platform receives subroutine code and a first tag that are sent by a service virtual instance running main program code, where the subroutine code is invoked by the main program code, and the first tag is used to indicate configuration information of a virtual instance running the subroutine code; the cloud platform creates or selects one or more first virtual instances based on the first tag; the cloud platform sends the subroutine code to the one or more first virtual instances; and the cloud platform receives a first running result obtained by separately running the subroutine code by the one or more first virtual instances, and sends the first running result to the service virtual instance.

In comparison with the first aspect, the main program code can directly run on a service virtual machine of a tenant, and the service virtual machine sends the subroutine code invoked by the main program code and the first tag to the cloud platform. The cloud platform creates or selects, based on the first tag, at least one virtual instance to run the subroutine code, receives the first running result obtained by running the subroutine code by the at least one virtual instance, and sends the first running result to the service virtual instance, so that the service virtual instance can continue running the main program based on the first running result. Therefore, the tenant can indicate, based on the tag, the cloud platform to create a corresponding virtual instance and run the subroutine code, cloud resources can be effectively used to run the subroutine code without changing an existing programming habit, and user experience can be improved.

Optionally, the configuration information includes a virtual instance specification.

The virtual instance specification includes a processor core number, a primary frequency amplitude of a processor, and a memory size that are of the virtual instance.

In a programming process, the tenant adds a tag in the program code, and sets a specification of a to-be-created virtual instance in the configuration information indicated by the tag. When a computing capability required for running the subroutine code is high, the virtual instance specification may be set as a high specification; or when the computing capability required for running the subroutine code is low, the virtual instance specification may be set as a low specification, thereby achieving a technical effect of flexibly using cloud resources to run the subroutine code. Because the virtual instance specification is in direct proportion to a sale price of the virtual instance, the tenant can also properly set, by setting a tag, a virtual instance specification based on cloud resource computing power required by the tenant, thereby effectively reducing costs of purchasing cloud resources from the cloud platform.

Optionally, the configuration information includes a virtual instance type, and the virtual instance type is used to indicate any one of a virtual machine, a container, and a bare metal server.

In the programming process, the tenant adds a tag in the program code, and sets a type of a to-be-created virtual instance in configuration information indicated by the tag, and the type is, for example, the virtual machine, the container, or the bare metal server, thereby achieving a technical effect of flexibly using cloud resources to run the subroutine code. Because different virtual instance types, for example, the virtual machine, the container, and the bare metal server, have different sale prices, the tenant can also properly select, by setting a tag, a virtual instance type based on cloud resource computing power required by the tenant, thereby effectively reducing costs of purchasing cloud resources from the cloud platform.

For large-scale computing, the tenant may select the virtual machine or the bare metal server. These two virtual instances run stably. For small-scale computing, the tenant may select the container.

Optionally, the configuration information includes a virtual instance number N, where N is a positive integer.

In the programming process, the tenant adds a tag in the program code, and sets a number of to-be-created virtual instances in configuration information indicated by the tag. The number is used to indicate a number of virtual instances running the subroutine code. When N is set as a complex number, the subroutine code runs in a plurality of virtual instances. For a big data scenario, parallel computing is an important data processing method. The tenant may tag, in the program code, a number of virtual instances running specific subroutine code, so that the plurality of virtual instances run the subroutine code in parallel. Therefore, the cloud platform can provide a parallel programming capability for the tenant.

Optionally, the subroutine code is used to indicate the one or more first virtual instances to respectively obtain different to-be-processed data from a shared storage space and respectively perform data processing on the obtained to-be-processed data.

Based on a scenario in which the plurality of virtual instances run the subroutine code in parallel, the tenant writes the subroutine code, so that the subroutine code is used to indicate the one or more first virtual instances to respectively obtain the different to-be-processed data from the shared storage space and respectively perform data processing on the obtained to-be-processed data. Therefore, the one or more first virtual instances can run same subroutine code for the different to-be-processed data to implement same program logic and implement parallel computing.

Optionally, the method further includes the following step: The cloud platform receives nested program code and a second tag that are sent when the service virtual instance runs, where the second tag is used to indicate configuration information of a virtual instance running the nested program code, and the nested program code is invoked by the subroutine code; the cloud platform creates or selects one or more second virtual instances based on the second tag, and sends the nested program code to the one or more second virtual instances; and the cloud platform obtains, from the one or more second virtual instances, a second running result generated by running the second program code by the one or more second virtual instances, and sends the second running result to the first virtual instance.

In this implementation, when the subroutine code invokes another piece of subroutine code, the another piece of subroutine code is referred to the nested program code. The second tag indicates the configuration information of the virtual instance running the nested program code. The cloud platform creates or selects the one or more second virtual instances based on the configuration information indicated by the second tag, sends the nested program code to the one or more second virtual instances for running, and sends the second running result obtained through running to the first virtual instance. Therefore, in this implementation, when subroutine code nesting exists, the cloud platform obtains the running result from the virtual instance running the nested program code, and sends the running result to the virtual instance that runs the subroutine code invoking the nested program code, so that the running result of the nested program code can reach the first virtual instance, and the first virtual instance continues running the subroutine code based on the running result, thereby implementing program code nesting.

Optionally, the method further includes the following steps: The cloud platform provides a cloud service, and sets a cloud service application programming interface API for the cloud service, where the cloud service API is set in the subroutine code, and the cloud service API is configured to invoke the cloud service provided by the cloud platform.

In this implementation, when writing the subroutine code, the tenant may invoke the cloud service API provided by the cloud platform, to fully use cloud resources provided by the cloud service.

Optionally, the cloud service API includes one or any combination of an object storage service API, a database service API, a shared cache service API, and a message queue service API.

Optionally, the first tag is an annotation of the subroutine code, or the first tag is program code that uses a predetermined syntax and that is adjacent to the subroutine code.

In this implementation, the first tag and the second tag may be set as annotations of the subroutine code, for example, before or after the program code, being @, \\, \, /, //, or another symbol tag pre-agreed with the cloud platform, and configuration information such as a type, a specification, and a number that are of the virtual instance is input in a predetermined format after the symbol. When detecting the symbol, the cloud platform creates a virtual instance based on the type, the specification, and the number that are of the virtual instance indicated after the symbol, and sends the subroutine code to the virtual instance for running. Through the annotation, a programming habit of the tenant does not need to be changed, and the tenant only needs to input the symbol before or after the subroutine code and input the configuration information after the symbol, so as to run the subroutine code by using the virtual instance on a cloud side.

The first tag and the second tag each may be set as program code that uses a predetermined syntax and that is adjacent to the subroutine code. For example, the cloud platform agrees to use a function creatvirtualinstance (type,spec,N) of the predetermined syntax as the tag. In this case, in a process of writing the program code, the tenant may invoke creatvirtualinstance (type,spec,N) at an adjacent location of the subroutine code (that is, a location before or after the subroutine), and input one or any combination of a type type, a specification spec, and a number N that are of a virtual instance based on a requirement of the tenant. That is, the subroutine code may be tagged, so that the subroutine code runs in a virtual instance created or selected by the cloud platform based on one or any combination of the type type, the specification spec, and the number N.

According to a third aspect, this application provides a cloud platform, including: a cloud service providing unit, configured to obtain program code of a tenant, where the program code includes a first tag and subroutine code, and the first tag is used to indicate configuration information of a virtual instance running the subroutine code; and a cloud program execution unit, configured to: create or select one or more first virtual instances based on the first tag, separately send the subroutine code to the one or more first virtual instances, and receive a first running result obtained by separately running the subroutine code by the one or more first virtual instances.

Any one of the third aspect or the implementations of the third aspect is a method implementation corresponding to any one of the first aspect or the implementations of the first aspect. The description in any one of the first aspect or the implementations of the first aspect is applicable to any one of the third aspect or the implementations of the third aspect. Details are not described herein.

According to a fourth aspect, this application provides a cloud platform, including: a cloud service providing unit, configured to create a service virtual instance, where the service virtual instance is used to run main program code; and a cloud program execution unit, configured to: receive subroutine code and a first tag that are sent by the service virtual instance, where the subroutine code is invoked by the main program code, and the first tag is used to indicate configuration information of a virtual instance running the subroutine code, create or select one or more first virtual instances based on the first tag, send the subroutine code to the one or more first virtual instances, receive a first running result obtained by separately running the subroutine code by the one or more first virtual instances, and send the first running result to the service virtual instance.

Any one of the fourth aspect or the implementations of the fourth aspect is a method implementation corresponding to any one of the second aspect or the implementations of the second aspect. The description in any one of the fourth aspect or the implementations of the fourth aspect is applicable to any one of the second aspect or the implementations of the second aspect. Details are not described herein.

According to a fifth aspect, this application provides a computer device, where the computer device includes a processor and a memory. The memory is configured to store computer-executable instructions, and the processor is configured to execute the computer-executable instructions stored in the memory, to enable the computer device to implement the method disclosed in any one of the first aspect or the possible implementations of the first aspect, or enable the computer device to implement the method disclosed in any one of the second aspect or the possible implementations of the second aspect.

According to a sixth aspect, this application provides a computer storage medium, including computer-readable instructions. When the computer-readable instructions are executed, the method disclosed in any one of the first aspect or the possible implementations of the first aspect is implemented, or the method disclosed in any one of the second aspect or the possible implementations of the second aspect is implemented.

According to a seventh aspect, this application provides a computer program product including an instruction. When the computer program product runs on a computer, the computer is enabled to perform the method disclosed in any one of the first aspect or the possible implementations of the first aspect, or the computer is enabled to perform the method disclosed in any one of the second aspect or the possible implementations of the second aspect.

### BRIEF DESCRIPTION OF DRAWINGS

FIG. 1 is a schematic diagram of an internal structure of a data center according to an embodiment of the present invention;
FIG. 2 is a schematic diagram of a system architecture of a program code processing system according to an embodiment of the present invention;
FIG. 3 is a schematic diagram of another system architecture of a program code processing system according to an embodiment of the present invention;
FIG. 4A to FIG. 4D are a diagram of data interaction in a program code processing method according to an embodiment of the present invention;
FIG. 5 is a schematic diagram of another system architecture of a program code processing system according to an embodiment of the present invention;
FIG. 6 is a schematic diagram of another system architecture of a program code processing system according to an embodiment of the present invention;
FIG. 7A and FIG. 7B are a diagram of another data interaction in a program code processing method according to an embodiment of the present invention;
FIG. 8 is a schematic diagram of a structure of a storage node according to an embodiment of the present invention;
FIG. 9 is a schematic diagram of a structure of a computing node according to an embodiment of the present invention;
FIG. 10 is a schematic diagram of another structure of a computing node according to an embodiment of the present invention;
FIG. 11 is a schematic diagram of another structure of a computing node according to an embodiment of the present invention; and
FIG. 12 is a schematic diagram of an apparatus structure of a computer device according to an embodiment of the present invention.

### DESCRIPTION OF EMBODIMENTS

The following describes the technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

To facilitate understanding of embodiments of this application, some terms in this application are first explained and described.

Cloud platform: The cloud platform is configured to provide a cloud service-related screen for a tenant to remotely access a cloud service. The tenant may log in to the cloud platform on a cloud service access page by using a pre-registered account and password, and after successful login, select and purchase a corresponding cloud service on the cloud service access page. The cloud service is, for example, an object storage service, a virtual machine service, or a container service. In embodiments of the present invention, the cloud platform may provide a cloud service for processing program code of the tenant.

Service logic: The service logic is logic of a program, which describes what the program executes. A software engineer writes source code, and the service logic is executed during execution of the source code. Corresponding to a statically compiled programming language, the source code developed by the software engineer is usually compiled into executable binary-format target code by using a compiler, and then the target code is executed by a processor of a computer. For a parsable programming language, a script parser usually parses source code to generate target code, and the target code is executed by the processor of the computer. The service logic mentioned in this embodiment of the present invention is logic of software running, and is specifically what the source code requires the computer to do.

Program code: In embodiments of the present invention, the program code may be source code or may be target code, which specifically depends on different application scenarios (which are described in detail below).

Compilation: In embodiments of the present invention, included program code may be compiled according to a programming language used by the program code. When the program code is a scripting language, for example, is a scripting language such as python, java, or ruby, in Embodiment 1 described below, the program code is the source code, a tenant may directly upload uncompiled source code to a cloud platform, a cloud program execution agent in a main program execution unit 30 of the cloud platform dynamically compiles main program code, a cloud program execution agent of a virtual instance 1 dynamically compiles program code 1, and cloud program execution agents of virtual instances 2 to 5 separately dynamically compile program code 2. In Embodiment 2, a cloud program execution agent in a service virtual instance dynamically compiles the main program code, the cloud program execution agent of the virtual instance 1 dynamically compiles the program code 1, and the cloud program execution agents of the virtual instances 2 to 5 separately dynamically compile the program code 2. A script parser is set in the cloud program execution agent. Based on the foregoing dynamic compilation, the scripting language may be compiled into a bytecode file (that is, the target code) that can be run by the script parser.

Optionally, in Embodiment 1, the program code is the target code, and the tenant may locally compile the program code by using the script parser, compile the main program code, the program code 1, and the program code 2 into bytecode files, and then upload the bytecode files to the cloud platform. In Embodiment 2, the tenant may compile the program code on a service virtual machine by using the script parser, compile the main program code, the program code 1, and the program code 2 into the bytecode files, and send the bytecode files of the program code 1 and the program code 2 to the cloud platform. Then, the cloud platform sends the bytecode file of the program code 1 to a virtual machine 1 for running, and sends the bytecode file of the program code 2 to virtual machines 2 to 5 for running.

When the program code is a non-scripting language, for example, is C++, in Embodiment 1, the program code is the source code, the tenant may directly upload the uncompiled source code to the cloud platform, the cloud program execution agent in the main program execution unit 30 of the cloud platform statically compiles the main program code, the cloud program execution agent of the virtual instance 1 statically compiles the program code 1, and the cloud program execution agents of the virtual instances 2 to 5 separately statically compile the program code 2. In Embodiment 2, the cloud program execution agent in the service virtual instance statically compiles the main program code, the cloud program execution agent of the virtual instance 1 statically compiles the program code 1, and the cloud program execution agents of the virtual instances 2 to 5 separately statically compile the program code 2. A compiler is set in the cloud program execution agent. Based on the foregoing static compilation, the source code may be compiled into a binary executable file (that is, the target code).

Optionally, in Embodiment 1, the program code is the target code, and the tenant may locally compile the program code by using the compiler, compile the main program code, the program code 1, and the program code 2 into binary executable files, and then upload the binary executable files to the cloud platform. In Embodiment 2, the tenant may compile the program code on the service virtual machine by using the compiler, compile the main program code, the program code 1, and the program code 2 into the binary executable files, and send the binary executable files of the program code 1 and the program code 2 to the cloud platform. Then, the cloud platform sends the binary executable file of the program code 1 to the virtual machine 1 for running, and sends the binary executable file of the program code 2 to the virtual machines 2 to 5 for running.

It should be noted that the virtual machines 1 to 5, the main program execution unit 30, and the cloud program execution agent designed above are described in detail below.

Virtual instance: The virtual instance is configured by a cloud platform, and is set with a running environment. The running environment includes an operating system and an application. The virtual instance is, for example, a virtual machine, a container, or a bare metal server.

Service virtual instance: The service virtual instance is a virtual instance created by a tenant on a cloud platform. The tenant may remotely log in to the service virtual instance through a client and run program code on the service virtual instance. The service virtual instance may be used as a production environment or a test environment of the tenant.

Main program code: The main program code, a main program for short, is also referred to as a main function, and in many imperative programming languages, the main function (main function) serves as a place at which a program starts to run.

Subroutine code: The subroutine code is a part of code in a large-scale program, and includes one or more statement blocks. The subroutine code is responsible for completing a specific task and is relatively independent of other code. In some cases, an input parameter is included, and the subroutine code has a return value (that is, a running result). The subroutine code may be invoked by main program code, and the subroutine code may also be invoked by another piece of subroutine code. Nested program code: The nested program code is subroutine code called during calling of another piece of subroutine code by subroutine code.

Tag: The tag refers to a tag mode of program code that is pre-agreed by a cloud platform. The cloud platform may provide a use method and a format of the tag, so that a tenant can add the tag to program code when writing the program code.

The tag has a function of separating subroutine code. The tag is set adjacent to the subroutine code, and is used to identify that the subroutine code is program code that needs to be executed by a virtual instance having configuration information indicated by the tag. An implementation of the tag is an annotation of the subroutine code, for example, before or after the program code, being @, \\, \, /, //, or another symbol tag pre-agreed with the cloud platform, and configuration information such as a type, a specification, and a number that are of the virtual instance is input in a predetermined format after the symbol. When detecting the symbol, the cloud platform creates a virtual instance based on the type, the specification, and the number that are of the virtual instance indicated after the symbol, and sends the subroutine code to the virtual instance for running. Through the annotation, a programming habit of the tenant does not need to be changed, and the tenant only needs to input the symbol before or after the subroutine code and input the configuration information after the symbol, so as to run the subroutine code by using the virtual instance on a cloud side. The tag may alternatively be set as program code that uses a predetermined syntax and that is adjacent to subroutine code. For example, the cloud platform agrees to use a function creatvirtualinstance (type,spec,N) of the predetermined syntax as the tag. In this case, in a process of writing the program code, the tenant may invoke creatvirtualinstance (type,spec,N) at an adjacent location of the subroutine code (that is, a location before or after the subroutine), and input one or any combination of a type type, a specification spec, and a number N that are of a virtual instance based on a requirement of the tenant. That is, the subroutine code may be tagged, so that the subroutine code runs in a virtual instance created or selected by the cloud platform based on one or any combination of the type type, the specification spec, and the number N.

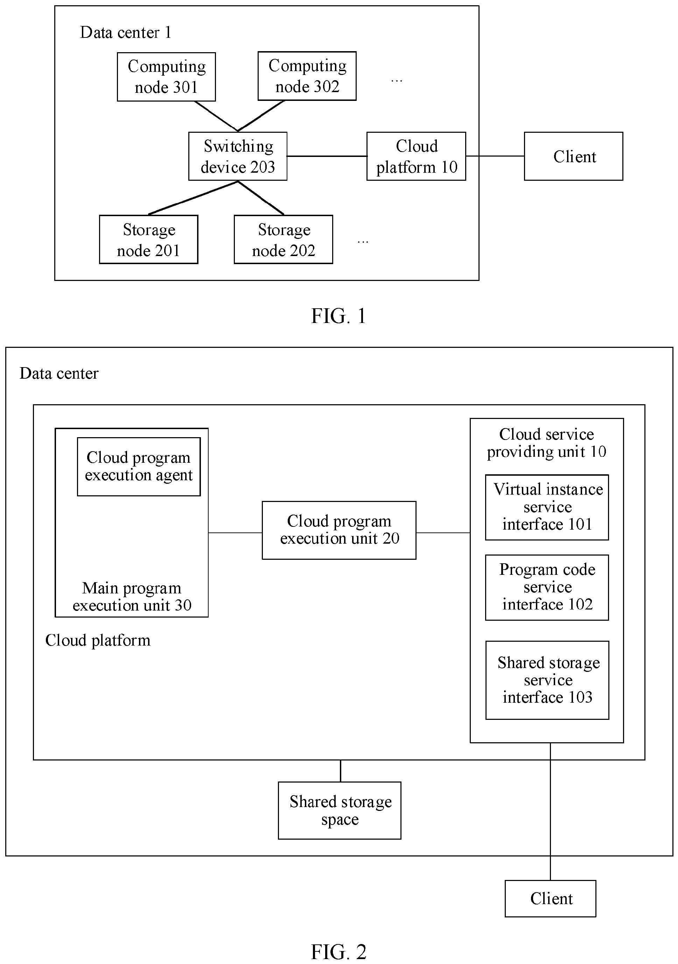

FIG. 1 is a schematic diagram of an internal structure of a data center according to an embodiment of the present invention. As shown in FIG. 1, the cloud platform is disposed in the data center, and the cloud platform is separately connected to a plurality of storage nodes 201, 202, and ..., and a plurality of computing nodes 01, 302, and ...,301 and 302 by using a switching device 203.

The client accesses the cloud platform, and the tenant operates the client to access a cloud service provided by the cloud platform.

The client may be, for example, a terminal device that can be operated by the tenant and that can access an internet, for example, a personal computer, a mobile phone, a tablet computer, or an in-vehicle host. The client accesses the data center by using an internet, and accesses the service provided by the cloud platform disposed in the data center.

Both the storage node and the computing node may be implemented by using a physical server. The storage node may provide a shared storage space, for example, an object storage service (Object Storage Service, OBS) bucket, a shared cache, or a shared database. The storage node is implemented by using a server set with a plurality of physical disks. The cloud platform may configure a virtual instance on the computing node. The virtual instance may be, for example, a virtual machine, a container, and a bare metal server.

The cloud platform is configured to provide a screen or an interface related to the cloud service for the tenant to remotely access the cloud service. The tenant may log in to the cloud platform by using a pre-registered account and password, and after successful login, select and purchase the corresponding cloud service on the cloud service access page provided by the cloud platform. The cloud service is, for example, the object storage service, the virtual machine service, or the container service. In embodiments of the present invention, the cloud platform may provide the cloud service for processing the program code of the tenant.

The following separately describes different embodiments in detail based on FIG. 1.

### Embodiment 1

In this embodiment, a tenant may upload program code to a cloud platform, or directly write the program code on the cloud platform. Configuration information of a virtual instance is annotated in a part of the program code. The cloud platform configures the virtual instance based on the configuration information, executes the part of program code by using the virtual instance, and obtains a running result of the part of program code from the virtual instance. Finally, the cloud platform notifies the tenant of the running result of the program code.

First, refer to FIG. 2. FIG. 2 is a schematic diagram of a system architecture of a program code processing system according to an embodiment of the present invention. As shown in FIG. 2, the program code processing system includes a data center and a client, and a cloud platform and a shared storage space are set in the data center.

The cloud platform includes a cloud service providing unit 10, a cloud program execution unit 20, and a main program execution unit 30. The cloud service providing unit 10 is configured to provide a cloud service for the tenant, and the cloud service providing unit 10 includes a virtual instance service interface 101, a program code service interface 102, and a shared storage service interface 103. The client may access the virtual instance service interface 101 to indicate the cloud service providing unit 10 to create, in the data center, a virtual instance accessible to the tenant. In addition, the client may access the shared storage service interface 103 to indicate the cloud service providing unit 10 to create, in the data center, a shared storage space accessible to the tenant. The tenant may upload data to the shared storage space and download data from the shared storage space. The client may further access the program code service interface 102. The client may upload the program code of the tenant to the cloud platform through an upload interface provided by the program code service interface 102, and the cloud platform processes, on a data center side, the program code uploaded by the tenant. Alternatively, the tenant may operate the client to access a program editing screen provided by the program code service interface 102, to write the program code online on the cloud platform, and the cloud platform processes, on the data center side, the program code written by the tenant online.

For example, the shared storage space may be based on an OBS bucket, a shared cache, or a shared database. The virtual instance may be, for example, a virtual machine, a container, or a bare metal server. The program code may be, for example, Java, C++, Python, Ruby, or any other common program language.

The shared storage space may be provided by the storage nodes shown in FIG. 1.

The main program execution unit 30 includes a cloud program execution agent. The main program execution unit 30 is configured to run main program code, and the cloud program execution agent is configured to communicate with another cloud program execution agent and execute program code tagged with an annotation.

Alternatively, the main program execution unit 30 may not be used, and the cloud platform may directly use a virtual instance set with a cloud program execution agent to run the main program code.

In this embodiment, the tenant may edit a program on the program editing screen provided by the program code service interface 102 or directly edit the program code locally, and send, by using the client, the edited program code to the upload interface provided by the program code service interface 102. The cloud platform provides a description for the tenant, so that the tenant notifies, in a process of editing the program code, the cloud platform by using a predetermined tag that a specified part of the program code needs to be executed by the virtual instance configured by the cloud platform. The program code service interface 102 may send the program code to the cloud program execution unit 20. The cloud program execution unit 20 sends the main program code in the program code to the main program execution unit 30 for execution; identifies the tag; configures a virtual instance based on configuration information indicated by the tag; and sends the part of program code tagged by the tag to the configured virtual instance for execution, to implement program code execution on a cloud. This can reduce computing load of the client without changing a programming habit of the tenant, thereby improving programming experience of the tenant.

The tag may be an annotation of a segment of program code, or program code that is adjacent to a segment of program code and that is set with a predetermined syntax.

The following uses a Java language as an example. It is assumed that the program code written by the tenant is as follows:

```
          @ClassHasQtFun
          class Demo{
          public static void main(String []args){
                    String outputDir = args[1]
                    String inputDir = args[2]
          runInCloud1(inputDir,outputDir)
               }
          @QtFun(taskNum = 1,flavor = "s2.small.1", type=VM, waitingForFinished = true)
          public static void runInCloud1(String inputDir,String outputDir){
 
                    String []inputFileList = Obs.readFileList(inputDir,URL);
 
                   runInCloud2(inputFileList,outputDir)
 
                    String []fileOutputList = Obs.readFileList(outputDir,URL)
 
                   for(int i =0;i< fileOutputList.1ength;i++){
                        saveHashAsFileInTheSameDir(fileOutputList[i]);
                   }
               }
          @QtFun(taskNum=4,cpu = 1,memory = 256, type=VM, waitingForFinished = true)
          public static void runInCloud2(String []fileList,String outputDir){
              int taskId =QtContext.getTaskIndex()
               for(init i=0;i< fileList.length;i++){
                   if(i % 4 == taskId){
                        transcodingToH265(fileList[i],outputDir + "/" + i + ".mp4");
                   }
               }
          }
```

This embodiment of the present invention is mainly described with the foregoing program code. As shown in the foregoing program code, program code 1 is invoked in a running process of main program code: public static void main(String []args). The program code 1 is a function runInCloud1(inputDir,outputDir). Program code 2, that is, a function runInCloud2(inputFileList,outputDir), is invoked in a running process of the program code 1, that is, the function runInCloud1(inputDir,outputDir).

Therefore, the program code 1 is subroutine code, the program code 2 is nested program code, and a tag @QtFun(taskNum = 1,flavor = "s2.small.1", type=VM, waitingForFinished = true) and a tag @QtFun(taskNum=4,cpu = 1,memory = 256, type=VM, waitingForFinished = true) may be used to indicate to the cloud platform that the program code 1 and the program code 2 are separated.

In addition, a tag @QtFun(taskNum = 1,flavor = "s2.small.1", type=VM, waitingForFinished = true) is set adjacent to the function runInCloud1(inputDir,outputDir). @QtFun is a preset tag in this embodiment of the present invention, and is used to indicate that the function runInCloud1(inputDir,outputDir) annotated by the tag needs to be executed by a virtual instance, a virtual instance type type is a virtual machine, a virtual machine specification flavor is s2.small. 1, a virtual machine number taskNum is 1, and the main program needs to wait for finishing execution of the function to perform a next step (waitingForFinished = true).

Further, a tag @QtFun(taskNum=4,cpu = 1,memory = 256, type=VM, waitingForFinished = true) is set for the function runInCloud2(inputFileList,outputDir). @QtFun is the preset tag in this embodiment of the present invention, and is used to indicate that the function runInCloud2(inputFileList,outputDir) annotated by the tag needs to be executed by a virtual instance, a virtual instance type type is a virtual machine, a processor specification of the virtual machine is 1 core, a memory specification is 256 M, a virtual machine number taskNum is 1, and the main program needs to wait for finishing execution of the function to perform a next step (waitingForFinished = true).

The tag is used to separate different subroutine code. The cloud platform can determine the different subroutine code by detecting the tag.

In this embodiment of the present invention, the specification may be determined by a flavor predefined by the cloud platform. For example, a specification indicated by s2.small.1 described above is, for example, a 2-core processor and memory of 512 M. Optionally, the specification may alternatively directly specify a CPU core number and a memory size. For example, cpu = 1,memory = 256 is specified in runInCloud2(inputFileList,outputDir). The cloud platform configures the virtual instance based on the configuration information by analyzing the configuration information indicated by the tag.

Specifically, the program code service interface 102 of the cloud platform sends the program code to the cloud program execution unit 20, and the cloud program execution unit 20 configures the virtual instance based on the configuration information indicated by the tag. According to the foregoing program code, the cloud program execution unit 20 first creates 1 virtual machine to run the program code 1, and when the program code 1 runs to a location at which the program code 2 needs to be invoked, creates 4 virtual machines to run the program code 2 in parallel.

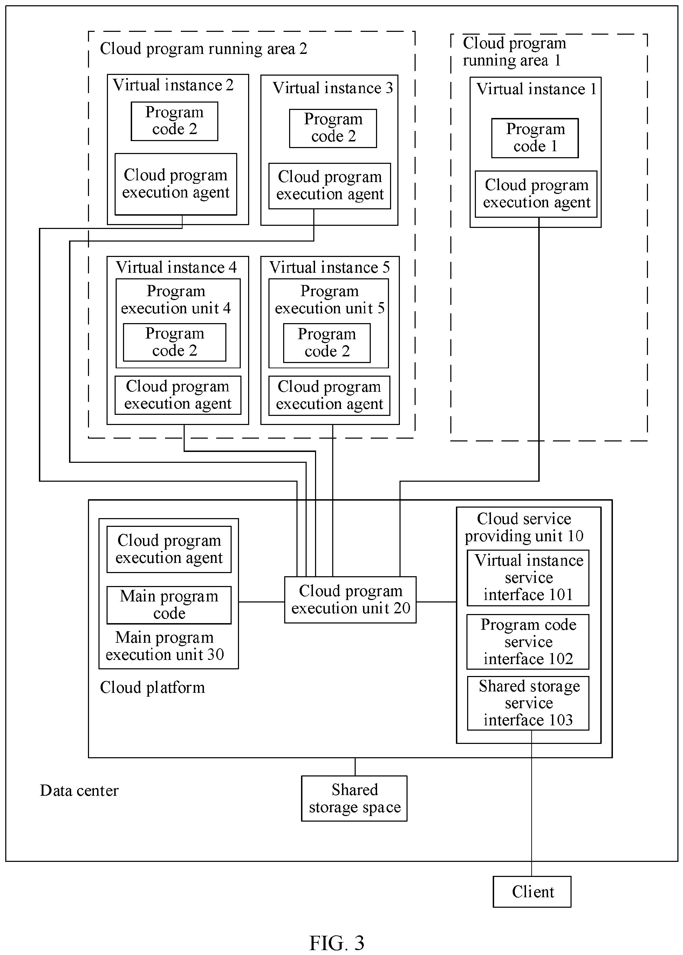

Refer to FIG. 3 together. FIG. 3 is a schematic diagram of another system architecture of a program code processing system according to an embodiment of the present invention. A difference between FIG. 3 and FIG. 2 lies in that virtual instances 1 to 5 configured by the cloud program execution unit 20 based on configuration information indicated by a tag are added to the system, and the cloud program execution unit 20 sends the main program code to the main program execution unit 30, sends the program code 1 to the virtual instance 1 for execution, and sends the program code 2 to the virtual instances 2 to 5 for execution, so that the program code of the tenant can be executed on the data center side based on the cloud platform.

Each subroutine code corresponds to a cloud program running area. As shown in FIG. 2, the virtual instance 1 is set in a cloud program running area 1, the virtual instance 2 is set in cloud program running areas 2 to 5, and the virtual instances 1 to 5 may specifically run on the computing nodes shown in FIG. 1.

Optionally, the tag may also be //, and an implementation is as follows:

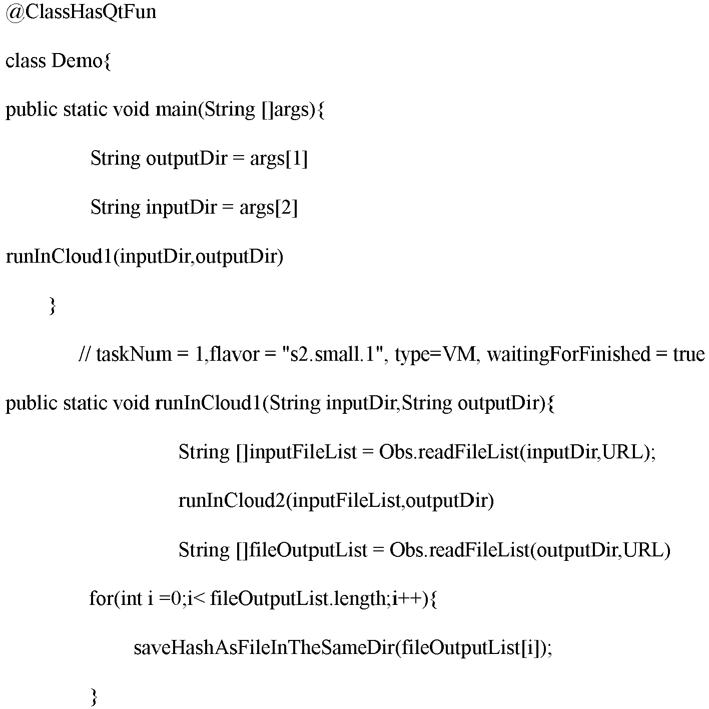

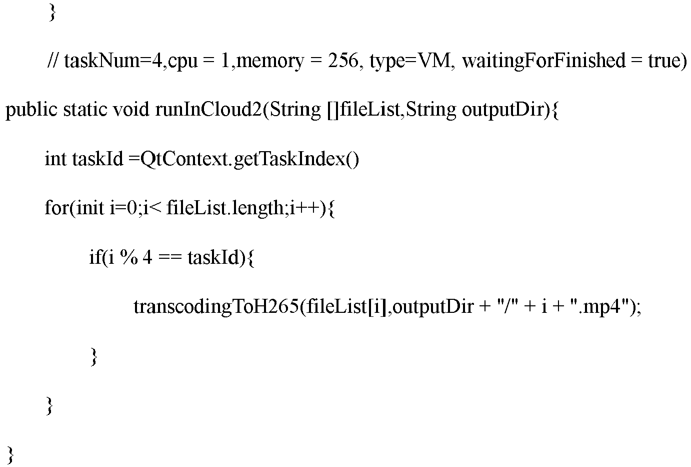

Therefore, @, //, \\, \, /, or another symbol tag pre-agreed with the cloud platform can be used as a specific implementation of the tag.

It should be noted that, in the foregoing instance code, the program code 1 is subroutine code, and the program code 2 is another subroutine code (that is, nested program code) invoked by the subroutine code. Optionally, in another implementation, it may alternatively be set that the main program code separately invokes two pieces of subroutine code, for example:

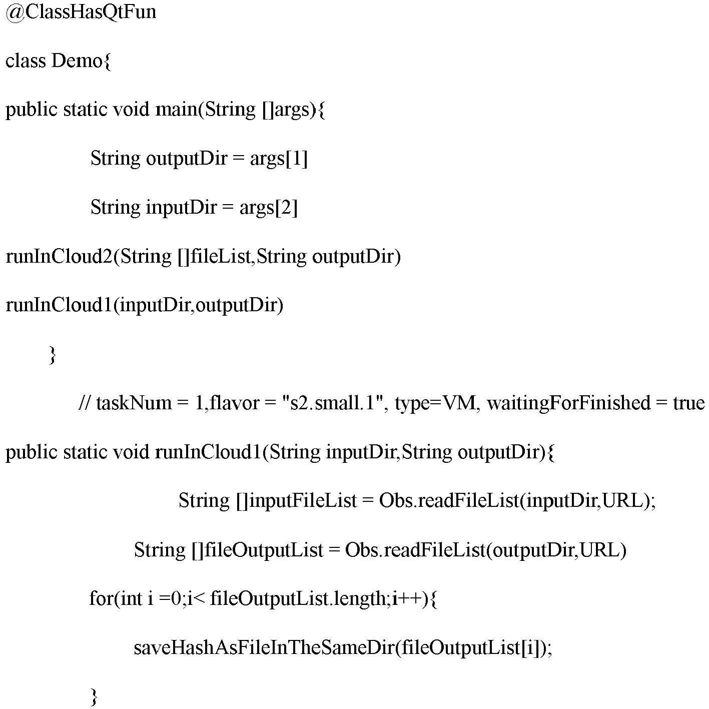

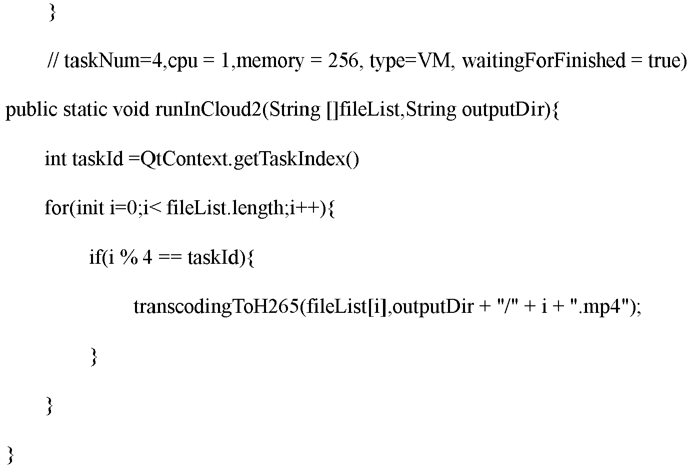

In the foregoing program code, the main program code first invokes the program code 2 to transcode data in the OBS bucket, and then invokes the program code 1 to perform a hash operation on H.265 data obtained based on transcoded data in the OBS bucket.

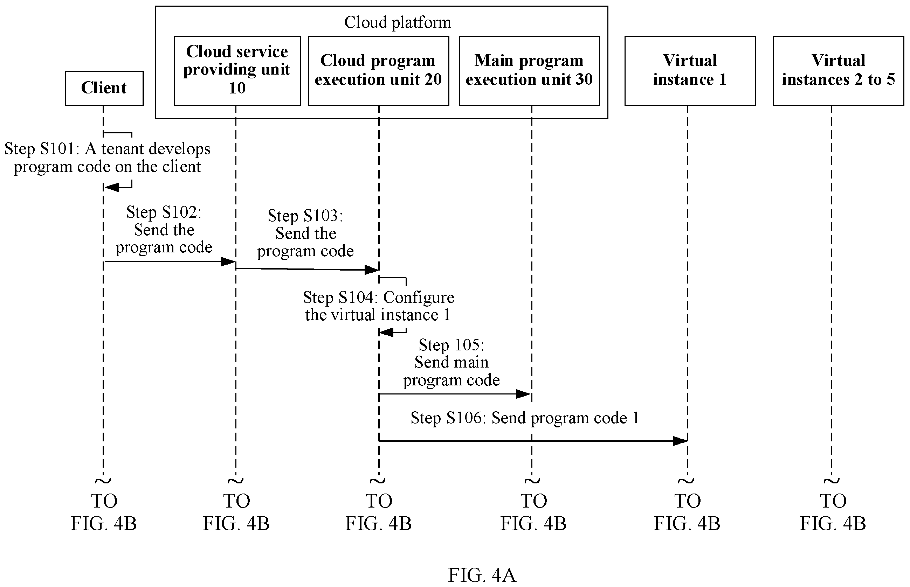

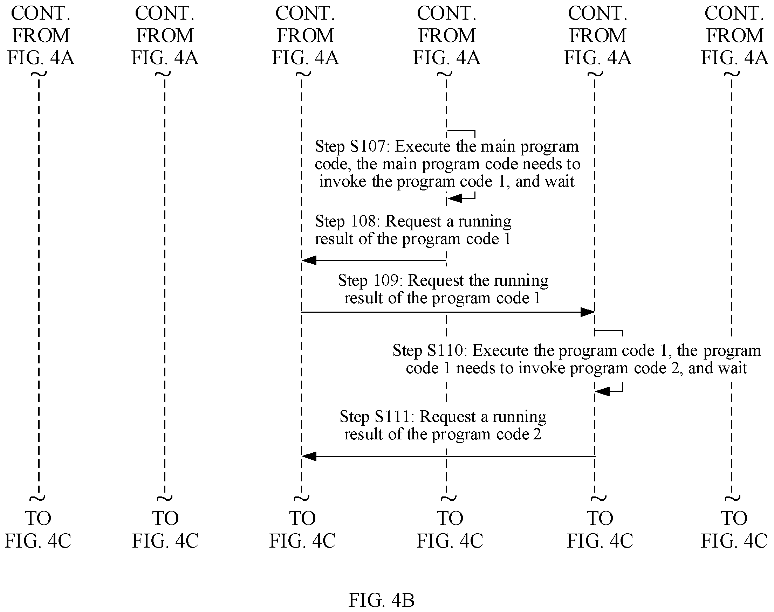

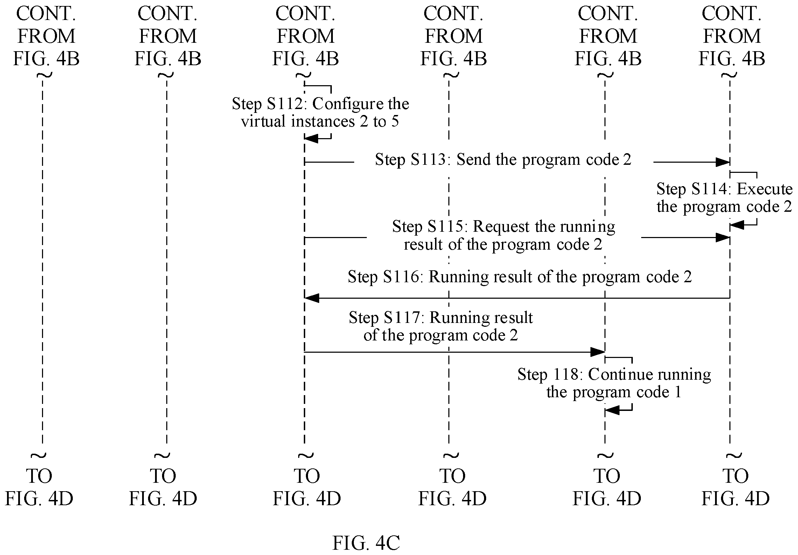

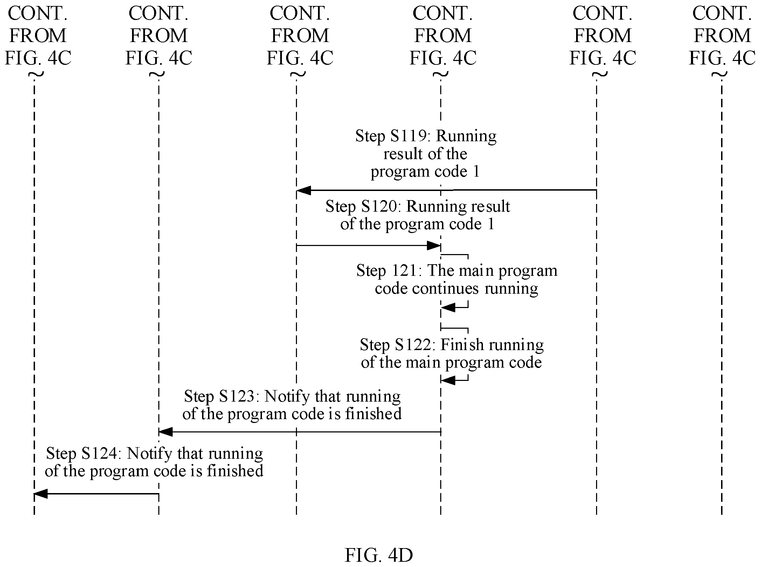

FIG. 4A to FIG. 4D are a diagram of data interaction in a program code processing method according to an embodiment of the present invention. The program code processing method may be applied to the cloud platform shown in FIG. 1 to FIG. 3. As shown in FIG. 4, the program code processing method according to this embodiment of the present invention includes the following steps.

Step S101: A tenant writes program code on a client.

The tenant installs a code editor on the client to write the program code. In addition, the tenant may tag a part of the code in an annotation manner based on a syntax provided by the cloud platform, and indicate configuration information in the tag. The configuration information may be used to indicate one or any combination of a type, a specification, and a number of virtual instances running the part of code. The program code includes main program code, program code 1, and program code 2, which may be, for example, the Java code described above.

Optionally, if the tenant does not indicate the type, the specification, or the number in the tag, the cloud platform configures a virtual instance based on a default type, specification, or number.

Further, the tenant may send the program code written in another place to the client, provided that an annotation is tagged in the program code. A manner of generating the program code is not limited in this embodiment of the present invention.

Step S102: The client sends the program code to the cloud platform.

Specifically, the client sends the program code to a program code service interface 102 in a cloud service providing unit 10.

The program code service interface 102 is specifically implemented as an upload interface, and the upload interface is configured to receive the program code uploaded by the tenant. Optionally, the program code service interface 102 may be specifically implemented as a program code editing screen. The tenant may remotely log in, by operating the client, to the program code editing screen provided by the cloud service providing unit 10, and write the program code online on the program code editing screen.

Step S103: The cloud service providing unit 10 sends the program code to a cloud program execution unit 20.

Step S104: The cloud program execution unit 20 sends the main program code to a main program execution unit 30.

Specifically, the cloud program execution unit 20 sends the main program code to a program execution unit of the main program execution unit 30.

For example, the main program code is as follows:

```
          @ClassHasQtFun
          class Demo{
          public static void main(String []args){
                    String outputDir = args[1]
                    String inputDir = args[2]
          runInCloud1(inputDir,outputDir)
               }
```

Step S105: The cloud program execution unit 20 configures a virtual instance 1 according to a tag of the program code 1.

For example, the tag of the program code 1 is:

```
          @QtFun(taskNum = 1,flavor = "s2.small.1", type=VM, waitingForFinished = true)
```

The cloud program execution unit 20 analyzes the tag to obtain the following configuration information: A virtual instance whose specification is s2.small. 1, type is a virtual machine, and number is 1 needs to be created. When running to a location at which the program code 1 is invoked, the main program code needs to wait for finishing execution of the program code 1 to continue running.

VM indicates the type is a virtual machine. In another embodiment, the type may further include a container container and a bare metal server (bare metal server).

Step S106: The cloud program execution unit 20 sends the program code 1 adjacent to the tag to the configured virtual instance 1.

The program code 1 is:

```
          public static void runInCloud1(String inputDir,String outputDir){
                   (which is used to first traverse files)
                    String []inputFileList = Obs.readFileList(inputDir,URL);
                   (which is used to start a cloud function 2 for transcoding)
                   runInCloud2(inputFileList,outputDir)
                   (which is used to traverse output files)
                    String []fileOutputList = Obs.readFileList(outputDir,URL)
 
                   (which is used to calculate a hash
value of a transcoded file and save the hash value)
                   for(int i =0;i< fileOutputList.length;i++){
                        saveHashAsFileInTheSameDir(fileOutputList[i]);
                   }
         }
```

Service logic of the program code 1 is as follows: A file list in an OBS bucket corresponding to a URL is read, and the program code 2 is invoked. The program code 2 separately performs transcoding processing on each file in the file list. After the program code 2 finishes transcoding, the program code 1 performs a hash operation on a transcoded file, and separately obtains a corresponding hash value for each transcoded file.

Each OBS bucket is located by using a uniform resource locator (Uniform Resource Locator, URL). After creating the OBS bucket, the cloud platform configures the URL for the OBS bucket and records the URL. The tenant can access the OBS bucket by using the URL.

It should be noted that the OBS bucket mentioned herein is the shared storage space shown in FIG. 1 and FIG. 2. The OBS bucket is a specific implementation of the shared storage space. The shared storage space may also be implemented by using a shared cache, a shared database, or another manner having a shared storage function.

In this embodiment of the present invention, the shared storage space is used to store to-be-processed data, and the to-be-processed data is, for example, a file in the OBS bucket.

In this embodiment of the present invention, program code that is disposed adjacent to the tag may be referred to as cloud program code. For example, both the program code 1 and the program code 2 may be referred to as the cloud program code. The cloud program code is executed by the virtual instance configured by the cloud program execution unit 20. In addition, the virtual instance 1 is set in a cloud program running area 1.

Step S107: The main program execution unit 30 executes the main program code to a location at which the program code 1 needs to be invoked, suspends execution of the main program code, and waits for finishing execution of the program code 1.

After executing the main program code to a statement String inputDir = args[2], a cloud program execution agent of the main program execution unit 30 needs to invoke the program code 1: runInCloud1(inputDir,outputDir). Because the program code 1 is tagged as running in the virtual instance, the cloud program execution agent of the main program execution unit 30 needs to request a running result of the program code 1 from the cloud program execution unit 20.

Step S108: The cloud program execution agent of the main program execution unit 30 requests the running result of the program code 1 from the cloud program execution unit 20.

Step S109: The cloud program execution unit 20 requests the running result of the program code 1 from the virtual instance 1.

Step S110: The virtual instance 1 executes the program code 1 to a location at which the program code 2 needs to be invoked, and starts to wait.

Specifically, a cloud program execution agent of the virtual instance 1 executes the program code 1, and after finishing executing String []inputFileList = Obs.readFileList(inputDir), finds that a next statement needs to invoke the program code 2: runInCloud2(inputFileList,outputDir). Because the program code 1 is tagged as that the program code 1 needs to run in the virtual instance, the cloud program execution agent of the virtual instance 1 needs to request a running result of the program code 2 from the cloud program execution unit 20.

Step S111: The cloud program execution agent of the virtual instance 1 requests the running result of the program code 2 from the cloud program execution unit 20.

Step S112: The cloud program execution unit 20 configures virtual instances 2 to 5 based on configuration information indicated by a tag of the program code 2.

Specifically, the tag of the program code 2 is @QtFun(taskNum=4,cpu = 1,memory = 256, type=VM, waitingForFinished = true). The cloud program execution unit 20 creates, based on the configuration information, 4 virtual instances whose type is a virtual machine, and a specification of the virtual instances is 1 CPU core and a memory size of 256 M. In addition, when running to the location at which the program code 2 is invoked, the program code 1 needs to wait for finishing execution of the program code 2 to continue running.

It should be noted that, when waitingForFinished = false, and the program code 1 runs to the location at which the program code 2 is invoked, the program code 1 may directly skip the program code 2, and does not need to wait for finishing execution of the program code 2.

In addition, the virtual instances 2 to 5 are set in a cloud program running area 2.

Step S113: The cloud program execution unit 20 separately sends the program code 2 to the configured virtual instances 2 to 5.

Step S114: The virtual instances 2 to 5 separately execute the program code 2.

Specifically, cloud program execution agents of the virtual instances 2 to 5 separately execute the program code 2.

```
            public static void runInCloud2(String []fileList,String
            outputDir){ (this part of code is allocated by the cloud program execution
            unit 20 to a cloud resource for running)
              int taskId =QtContext.getTaskIndex()
               for(init i=0;i< fileList.length;i++){
                   if(i % 4 == taskId){
                        transcodingToH265(fileList[i],outputDir + "/" + i + ".mp4"); } } }
```

In this step, the virtual instances 2 to 5 execute the same program code 2, to run same service logic. The service logic of the program code is as follows:

Each of the virtual instances 2 to 5 obtains a task identifier taskId of each of the virtual instances 2 to 5 according to QtContext.getTaskIndex(). When running QtContext.getTaskIndex(), the virtual instance sends a request to the cloud program execution unit 20. The cloud program execution unit 20 returns taskId to the virtual instance based on the request, and taskIds of the virtual instances 2 to 5 are different and arranged in sequence, for example, taskId of the virtual instance 2 is 0, taskId of the virtual instance 3 is 1, taskId of the virtual instance 4 is 2, and taskId of virtual instance 5 is 3.

For each file in the file list, if a remainder obtained by performing a modulo operation on a sequence number i of the file and the virtual instance number 4 is equal to taskId of the virtual instance, the file whose sequence number is i is transcoded by the virtual instance, and transcodingToH265(fileList[i],outputDir + "/" + i + ".mp4") is used to transcode an i^{th} file in the file list to a file in an H265 format.

After finishing running the program code 2, each virtual instance records the running result of the program code 2. The running result is, for example, 1 or 0, where 1 indicates that running succeeds, and 0 indicates that running fails. In this embodiment, it is assumed that each virtual instance successfully runs the program code 2, and therefore, the running result of the program code 2 recorded by each of the virtual instances 2 to 5 is 1.

Therefore, in this step, the cloud platform provides the to-be-processed data, and the program code 2 is used to indicate the virtual instances 2 to 5 to obtain the to-be-processed data from the cloud platform and execute the service logic of the program code 2 based on the to-be-processed data.

Further, QtContext.getTaskIndex() is a message queue service API provided by the cloud platform, which is defined by the cloud program execution unit 20 of the cloud platform. When invoking QtContext.getTaskIndex(), the virtual instance sends a request to the cloud program execution unit 20, and the cloud program execution unit 20 returns taskId to the virtual instance based on the request.

It should be noted that, the cloud program execution unit 20 of the cloud platform may further provide another cloud service besides a message queue service and set a cloud service application programming interface API for the cloud service. When a corresponding cloud service API is set in the program code, the cloud service API may be configured to indicate the virtual instance to invoke the cloud service provided by the cloud platform when being invoked. The cloud service API further includes an object storage service API, a database service API, and a shared cache service API. For example, the object storage service API is Obs.readFileList(outputDir,URL).

When the virtual instance runs the object storage service API, the URL of the OBS bucket needs to be entered, so that the cloud program execution unit 20 locates a to-be-accessed OBS bucket according to the URL, and the virtual instance may access the OBS bucket by using the cloud program execution unit 20.

When the virtual instance runs the database service API, a name of a database, an account, and a password need to be entered, so that the cloud program execution unit 20 locates the database, and logs in to the database by using the account and the password, and the virtual instance may access the database by using the cloud program execution unit 20.

When the virtual instance runs the shared cache service API, a name of a shared cache needs to be entered, so that the cloud program execution unit 20 can locate the shared cache according to the name, and the virtual instance can share the cache by using the cloud program execution unit 20.

Step S115: The cloud program execution unit 20 separately requests the running result of the program code 2 from each of the virtual instances 2 to 5.

Specifically, the cloud program execution unit 20 separately sends a request for the running result of the program code 2 to the cloud program execution agents of the virtual instances 2 to 5.

Step S116: The virtual instances 2 to 5 separately returns the running result of the program code 2 to the cloud program execution unit 20.

Specifically, the cloud program execution agents of the virtual instances 2 to 5 separately return the running result of the program code 2 to the cloud program execution unit 20.

Step S117: The cloud program execution unit 20 returns the running result of the program code 2 to the virtual instance 1.

Specifically, the cloud program execution unit 20 returns the running result of the program code 2 to the cloud program execution agent of the virtual instance 1.

Step S118: The virtual instance 1 continues running the program code 1.

Specifically, the cloud program execution agent of the virtual instance 1 continues running the program code 1 based on the running result of the program code 2, and executes remaining statements:

```
String []fileOutputList = Obs.readFileList(outputDir,URL)
                             //which is used to calculate a hash value
of a transcoded file and save the hash value
                   for(int i =0;i< fileOutputList.length;i++){
                        saveHashAsFileInTheSameDir(fileOutputList[i])
```

After execution of the foregoing statements is finished, the running result of the program code 1 is recorded (it is assumed that execution is successful, and the running result is 1).

Step S119: The virtual instance 1 sends the running result of the program code 1 to the cloud program execution unit 20.

Specifically, the cloud program execution agent of the virtual instance 1 sends the running result of the program code 1 to the cloud program execution unit 20. This step is used as a response to step 108.

Step S120: The cloud program execution unit 20 sends the running result of the program code 1 to the main program execution unit 30.

Specifically, the cloud program execution unit 20 sends the running result of the program code 1 to the cloud program execution agent of the main program execution unit 30.

Step S121: The main program execution unit 30 continues executing the main program code.

Specifically, the cloud program execution agent of the main program execution unit 30 continues executing the main program code based on a running result of the program code 1.

Step S122: Running of the main program code is finished.

Step S123: The cloud program execution agent of the main program execution unit 30 notifies the cloud service providing unit 10 that running of the main program code is finished.

Step S124: The cloud service providing unit 10 notifies the client that the main program code runs successfully.

Specifically, the cloud service providing unit 10 notifies, by using the program code service interface 102, the client that running of the main program code is finished.

In this case, the tenant learns, from the program code service interface 102 by using the client, that running of the program code is finished, and transcoding and hash value operation processing are performed on the data in the OBS bucket.

It should be noted that, in the foregoing embodiment, the virtual instance number is not limited as long as a computing capability of the data center permits. For example, the tenant may select 1 to 1000 virtual instances to perform parallel computing on different to-be-processed data based on same program logic.

In addition, in Embodiment 1, only one data center is disclosed. In another embodiment of the present invention, there may be more than one data center. For a scenario of cross-data center cooperation, the tenant may select to configure more virtual instances.

Further, for step S105 and step S112 of configuring the virtual instance, the cloud platform may create a virtual instance on a physical server based on configuration information indicated by a tag; or the cloud platform pre-creates a plurality of virtual instances, and selects, from the plurality of virtual instances, a virtual instance that matches the configuration information indicated by the tag.

In addition, the tag is an annotation of the program code 1 or the program code 2. However, in another embodiment of the present invention, the tag may be other program code that uses a predetermined syntax and that is adjacent to the program code 1 or the program code 2.

Optionally, the tag may be any tag pre-agreed with the cloud platform.

In conclusion, according to this embodiment of the present invention, the program code of the tenant can be executed on the data center side. In addition, the tenant does not need to change the programming habit of the tenant, and can write the program code by using a programming language commonly used by the tenant. The tenant only needs to tag the part of program code that needs to be executed on the virtual instance, and set, in the tag, the configuration information of the virtual instance running the program code. The cloud platform creates or selects, according to the tag, the virtual instance matching the configuration information, sends the program code to the virtual instance for running, and obtains the running result from the virtual instance, so that the program code can run by using the virtual instance. For scenarios such as big data processing, a neural network, and large-scale application program development, because the computing capability of the data center is fully used, and an entry threshold is low (the tenant only needs to tag specific program code), convenience of performing large-scale parallel computing by using the cloud resource by the tenant can be greatly improved.

### Embodiment 2

In this embodiment, a tenant may create a service virtual instance in a data center by using a cloud platform, and write program code on the service virtual instance or send the program code from another device to the service virtual instance. The program code runs in the service virtual instance, and configuration information of a virtual instance is annotated in a part of the program code. When running to the part of program code, the service virtual instance notifies the cloud platform to configure the virtual instance based on the configuration information, execute the part of program code by using the virtual instance, and obtain a running result of the part of program code from the virtual instance. Finally, the service virtual instance notifies the tenant of the running result of the program code.

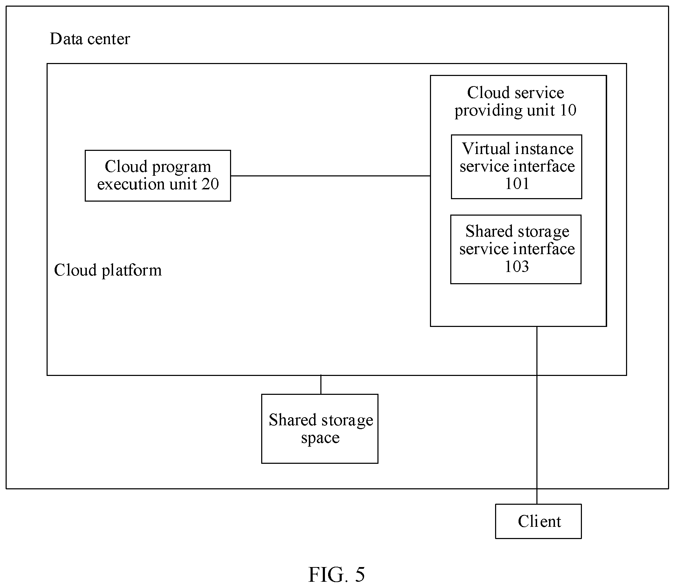

For details, refer to FIG. 5. FIG. 5 is a schematic diagram of another system architecture of a program code processing system according to an embodiment of the present invention. In comparison with FIG. 2, in this embodiment shown in FIG. 5, a cloud service providing unit 10 provides no program code service interface 102, and no main program execution unit 30 is set on the cloud platform.

In comparison with Embodiment 1, in Embodiment 2, the program code directly runs in a production environment or a test environment (that is, the service virtual instance) of the tenant, and in a running process of the program code, a tagged part of the program code runs by using the virtual instance configured on the cloud platform, which can also improve convenience of performing large-scale parallel computing by using a cloud resource by the tenant. In addition, in Embodiment 2, the program code directly runs in the production environment, and in a scenario in which the tenant purchases the service virtual instance, the program code is directly executed on the service virtual instance, so that a use habit of the tenant can be better complied.

The program code exemplified in this embodiment is consistent with the Java code shown in Embodiment 1. The service virtual instance of the tenant is created by the tenant by using a client to access a virtual instance service interface 101 in a service providing unit of the cloud platform. After the service virtual instance is created, the tenant may remotely log in to the service virtual instance by using the client. After the tenant creates the service virtual instance, the cloud platform may provide an installation file of a cloud program execution agent, and the tenant may download the installation file and install the installation file in the service virtual instance.

Optionally, the cloud program execution agent may also be pre-installed in the service virtual instance.

The service virtual instance directly runs the program code. The cloud program execution agent of the service virtual instance may identify a tag, configure a virtual instance according to the tag, and send a part of program code set with the tag to the configured virtual instance for execution, to implement program code execution on a cloud. This can reduce computing load of the client without changing a programming habit of the tenant, thereby improving programming experience of the tenant.

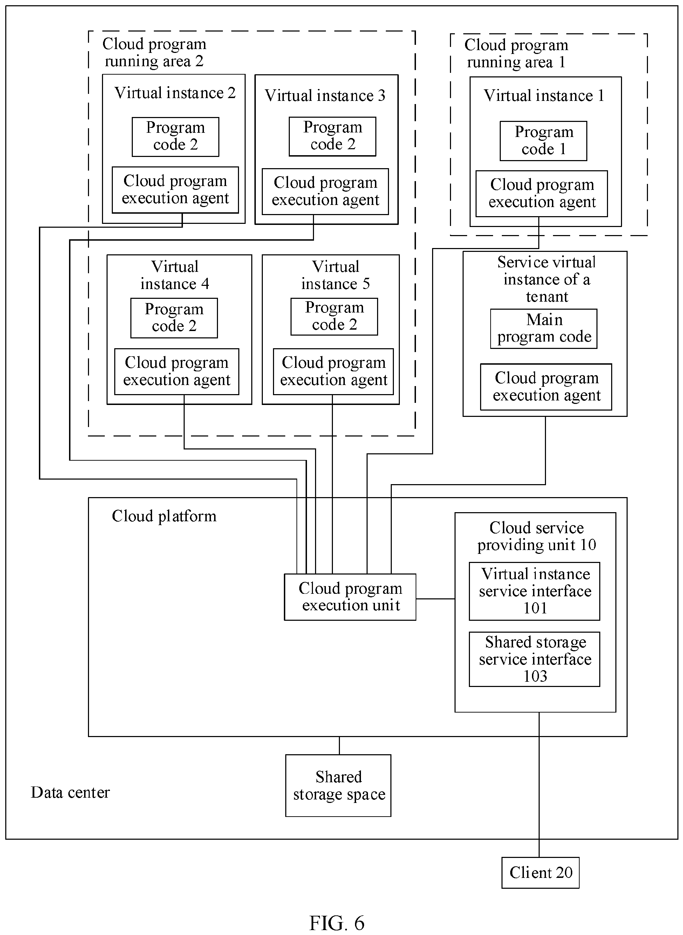

Refer to FIG. 6 together. FIG. 6 is a schematic diagram of another system architecture of a program code processing system according to an embodiment of the present invention. A difference between FIG. 6 and FIG. 5 lies in that virtual instances 1 to 5 configured by a cloud program execution unit 20 based on configuration information indicated by a tag are added to the system, and the cloud program execution unit 20 sends program code 1 to the virtual instance 1 for execution, and sends program code 2 to the virtual instances 2 to 5 for execution, so that the program code of the tenant can be executed on a data center side based on the cloud platform.

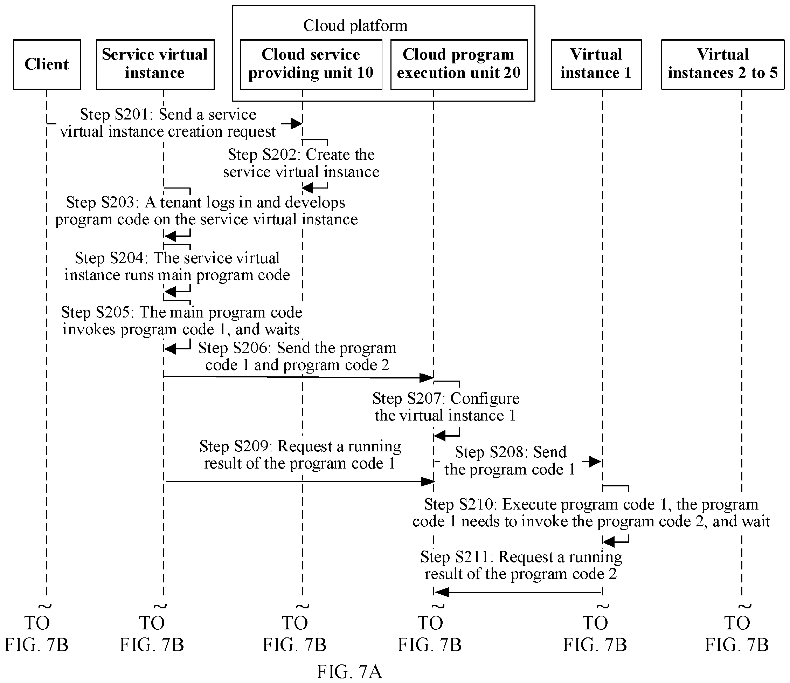

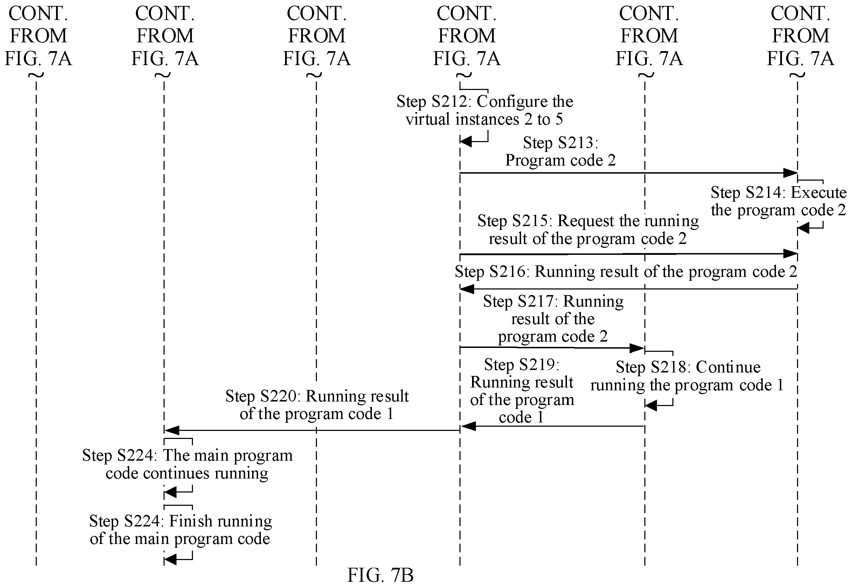

Refer to FIG. 7A and FIG. 7B together. FIG. 7A and FIG. 7B are a diagram of another data interaction in a program code processing method according to an embodiment of the present invention. The program code processing method shown in FIG. 7A and FIG. 7B may be applied to the architectures shown in FIG. 1 to FIG. 3 and FIG. 5 and FIG. 6. As shown in FIG. 7A and FIG. 7B, the program code processing method according to this embodiment of the present invention includes the following steps:
Step S201: A client sends a service virtual instance creation request to a cloud platform.

Specifically, a tenant operates the client to access a virtual instance service interface 101 of a cloud service providing unit 10, and selects a type and a specification of a service virtual instance in the virtual instance service interface 101. The cloud platform creates the service virtual instance corresponding to the type and the specification.

Step S202: The cloud platform creates the service virtual instance.

Specifically, the cloud service providing unit 10 of the cloud platform creates the service virtual instance corresponding to the type and the specification.

Step S203: The tenant remotely logs in to the service virtual instance by using the client, and develops program code on the service virtual instance.

Optionally, the tenant may operate the service virtual instance to download the program code from another device.

Step S204: The service virtual instance runs main program code.

Specifically, a cloud program execution agent of the service virtual instance runs the main program code:

```
          @ClassHasQtFun
          class Demo{
          public static void main(String []args){
                    String outputDir = args[1]
                    String inputDir = args[2]
          runInCloud1(inputDir,outputDir)
               }
```

Step S205: The service virtual instance runs the main program code to a location at which program code 1 needs to be invoked, and starts to wait.

Specifically, after running a statement String inputDir = args[2], the cloud program execution agent of the service virtual instance starts to wait.

Step S206: The service virtual instance sends the program code 1 and program code 2 to a cloud program execution unit 20.

Specifically, the cloud program execution agent of the service virtual instance identifies, according to a tag @QtFun(taskNum = 1,flavor = "s2.small.1", type=VM, waitingForFinished = true), that the program code 1 annotated by the tag is program code that needs to be executed by a virtual instance, and sends the program code 1 to the cloud program execution unit 20.

Similarly, the cloud program execution agent of the service virtual instance identifies, according to a tag @QtFun(taskNum=4,cpu = 1,memory = 256, type=VM, waitingForFinished = true), that the program code 2 annotated by the tag is program code that needs to be executed by a virtual instance, and sends the program code 2 to the cloud program execution unit 20.

Step S207: The cloud program execution unit 20 configures a virtual instance 1 according to the tag @QtFun(taskNum = 1,flavor = "s2.small.1", type=VM, waitingForFinished = true).

The cloud program execution unit 20 analyzes the tag to obtain the following information: A virtual instance whose specification is s2.small.1, type is a virtual machine, and number is 1 needs to be created. When running to the location at which the program code 1 is invoked, the main program code needs to wait for finishing execution of the program code 1 to continue running.

Step S208: The cloud program execution unit 20 sends the program code 1 to the configured virtual instance 1.

Step S209: The cloud program execution agent of the service virtual instance requests a running result of the program code 1 from the cloud program execution unit 20.

Step S210: The cloud program execution unit 20 requests the running result of the program code 1 from the virtual instance 1.

Step S211: A cloud program execution agent of the virtual instance 1 executes the program code 1 to a location at which the program code 2 needs to be invoked, and starts to wait.

Step S212: The virtual instance 1 requests a running result of the program code 2 from the cloud program execution unit 20.

Step S213: The cloud program execution unit 20 configures virtual instances 2 to 5 based on configuration information indicated by a tag of the program code 2.

Step S214: The cloud program execution unit 20 separately sends the program code 2 to the configured virtual instances 2 to 5.

Step S215: The virtual instances 2 to 5 separately execute the program code 2.

Step S216: The cloud program execution unit 20 requests the running result of the program code 2 from each of the virtual instances 2 to 5.

Step S217: Each of the virtual instances 2 to 5 sends the running result of the program code 2 to the cloud program execution unit 20.

Step S218: The cloud program execution unit 20 sends the running result of the program code 2 to the virtual instance 1.

Step S219: The cloud program execution agent of the virtual instance 1 receives the running result of the program code 2, and continues running the program code 1 based on the running result, to generate the running result of the program code 1.

Step S220: The virtual instance 1 sends the running result of the program code 1 to the cloud program execution unit 20.

Step S221: The cloud program execution unit 20 sends the running result of the program code 1 to the cloud program execution agent of the service virtual instance.

Step S222: The cloud program execution agent of the service virtual instance ends waiting based on the running result of the program code 1, and continues executing the main program code.

Step S223: The cloud program execution agent of the service virtual instance finishes running remaining main program code.

So far, the tenant logs in to the service virtual instance by using the client and learns, from the cloud program execution agent of the service virtual instance, that running of the program code is finished, and transcoding and hash value operation processing are performed on data in an OBS bucket.

In Embodiment 2, except that an execution body of a main program code is a service virtual machine, other aspects are basically the same as those in Embodiment 1. It should be noted that, similar to Embodiment 1, in this embodiment, a virtual instance number is not limited as long as a computing capability of a data center (depending on a number of idle physical servers) permits. For example, the tenant may select 1 to 1000 virtual instances to perform parallel computing on different to-be-processed data based on same program logic.

In addition, in Embodiment 2, only one data center is disclosed. In another embodiment of the present invention, there may be more than one data center. For a scenario of cross-data center cooperation, the tenant may select to configure more virtual instances.

Further, for step S207 and step S213 of configuring the virtual instance, the cloud platform may create the virtual instance on a physical server based on the configuration information indicated by the tag; or the cloud platform pre-creates a plurality of virtual instances, and selects, from the plurality of virtual instances, a virtual instance that matches the configuration information indicated by the tag.

In addition, the tag is an annotation of the program code 1 or the program code 2. However, in another embodiment of the present invention, the tag may be other program code that uses a predetermined syntax and that is adjacent to the program code 1 or the program code 2.

In conclusion, according to this embodiment of the present invention, the program code of the tenant can be executed on the data center side. In addition, the tenant does not need to change the programming habit of the tenant, and can write the program code by using a programming language commonly used by the tenant. The tenant only needs to tag the part of program code that needs to be executed on the virtual instance, and set, in the tag, the configuration information of the virtual instance running the program code. The cloud platform creates or selects, according to the tag, the virtual instance matching the configuration information, sends the program code to the virtual instance for running, and obtains the running result of the program code from the virtual instance, so that the program code can run by using the virtual instance. For scenarios such as big data processing, a neural network, and large-scale application program development, because the computing capability of the data center is fully used, and an entry threshold is low (the tenant only needs to tag specific program code), convenience of performing large-scale parallel computing by using the cloud resource by the tenant can be greatly improved.

In comparison with Embodiment 1, in Embodiment 2, the program code directly runs in a production environment or a test environment (that is, the service virtual instance) of the tenant, and in a running process of the program code, a tagged part of the program code runs in the virtual instance configured on the cloud platform, which can improve convenience of performing large-scale parallel computing by using the cloud resource by the tenant. In addition, in Embodiment 2, because the program code directly runs in the production environment, in a scenario in which the tenant purchases the service virtual instance, a use habit of the tenant can be better complied.

It should be noted that, in Embodiment 1 and Embodiment 2, the main program code invokes the program code 1, and then the program code 1 invokes the program code 2. However, it should be noted that embodiments of the present invention are not limited thereto. The main program code may separately invoke the program code 1 and the program code 2. The tenant may alternatively enable, based on an actual requirement, the main program code to invoke more program code 1, and the program code 1 may nest and invoke more layers of program code 2.

Further, in the foregoing embodiments, the virtual instances 2 to 5 configured by the cloud program execution unit 20 based on the configuration information indicated by the tag may be released after the virtual instances 2 to 5 return the running result of the program code 2 to the cloud program execution unit 20, and the virtual instance 1 may be released after the virtual instance 1 returns the running result of the program code 1 to the cloud program execution unit 20. Releasing means, for example, stopping running of the virtual instance, and de-registering the virtual instance from the physical server or clearing data recorded in a memory of the virtual instance. Releasing the virtual instance in time can improve a resource use efficiency of the virtual instance.

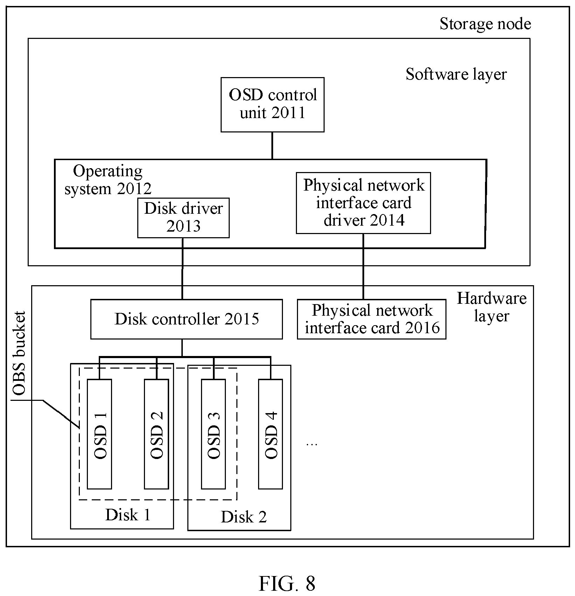

FIG. 8 is a schematic diagram of a structure of a storage node according to an embodiment of the present invention. The storage node (that is, the storage node 201 or 202 shown in FIG. 1) includes a software layer and a hardware layer. The hardware layer includes a disk controller 2015, a physical network interface card 2016, a physical disk 1, and a physical disk 2. The software layer includes an object storage device (Object Storage Device, OSD) control unit 2011 and an operating system 2012. The OSD control unit 2011 runs on the operating system 2012. The operating system 2012 includes a disk driver 2013 and a physical network interface card driver 2014. A cloud platform may communicate with the OSD control unit 2011 by using the physical network interface card 2016. The OSD control unit 2011 controls, by using the disk driver 2013, the disk controller 2015 to set the physical disk 1 and the physical disk 2 as a plurality of object storage devices OSDs. After receiving an OBS bucket creation instruction of a tenant, the cloud platform notifies the OSD control unit 2011 to create an OBS bucket. At this time, the OSD control unit 2011 sets OSDs 1 to 3 as the OBS bucket and configures a URL for the OBS bucket. The tenant may upload the to-be-processed data included in the foregoing embodiments to the OBS bucket. The URL is an address that is of the to-be-processed data and that is provided by the cloud platform.

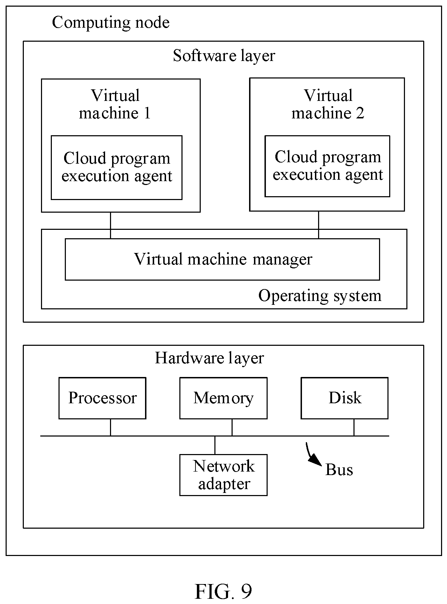

FIG. 9 is a schematic diagram of a structure of a computing node according to an embodiment of the present invention. The computing node (for example, the computing node 301 or 302 shown in FIG. 1) includes a software layer and a hardware layer. The hardware layer includes a processor, a memory, a disk, and a network adapter that separately access a bus. The software layer includes an operating system and a plurality of virtual machines running on the operating system, for example, a virtual machine 1 and a virtual machine 2 shown in FIG. 9. A virtual machine manager is disposed in the operating system, which is configured to manage the plurality of virtual machines and set virtual hardware for each virtual machine based on the hardware layer. A cloud program execution agent is set in each virtual machine. A cloud platform may communicate with the virtual machine manager by using the network adapter. The cloud platform creates or de-registers the virtual machine on the computing node by using the virtual machine manager, and performs full life cycle management on the virtual machine.

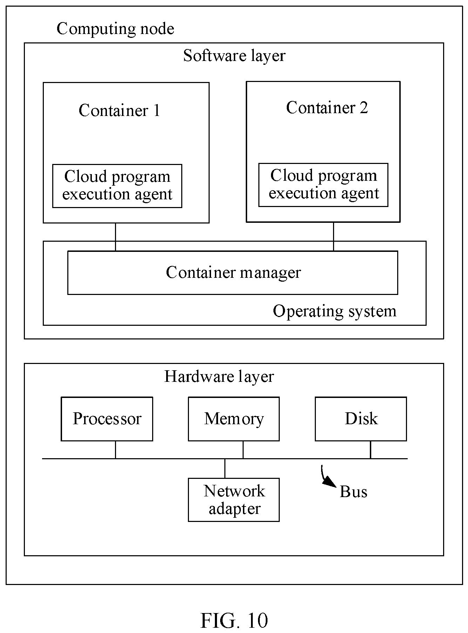

FIG. 10 is a schematic diagram of another structure of a computing node according to an embodiment of the present invention. The computing node (for example, the computing node 301 or 302 shown in FIG. 1) includes a software layer and a hardware layer. The hardware layer includes a processor, a memory, a disk, and a network adapter that separately access a bus. The software layer includes an operating system and a plurality of containers running on the operating system, for example, a container 1 and a container 2 shown in FIG. 10. A container manager is disposed in the operating system, which is configured to manage the plurality of containers and set virtual hardware for each container based on the hardware layer. A cloud program execution agent is set in each container. A cloud platform may communicate with the container manager by using the network adapter. The cloud platform creates or de-registers the container on the computing node by using the container manager, and performs full lifecycle management on the container.

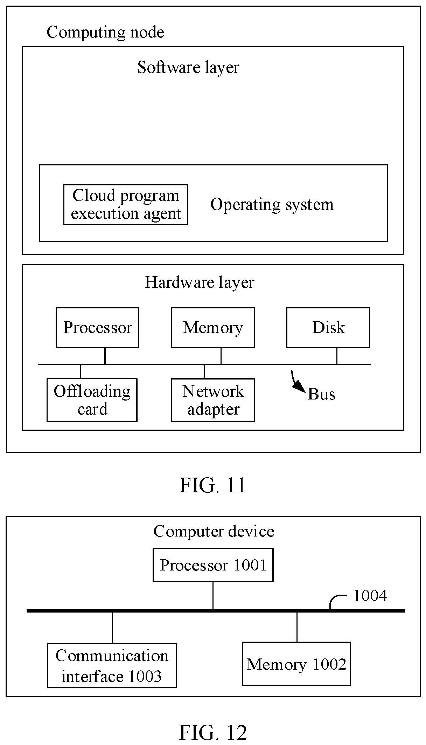

FIG. 11 is a schematic diagram of another structure of a computing node according to an embodiment of the present invention. The computing node (for example, the computing node 301 or 302 shown in FIG. 1) includes a software layer and a hardware layer. The hardware layer includes a processor, a memory, a disk, a network adapter, and an offloading card that separately access a bus. The software layer includes an operating system and a cloud program execution agent disposed in the operating system. A cloud platform may manage the computing node by using the offloading card, so that a tenant manages all hardware resources of the computing node except the offloading card. In this case, the computing node is a bare metal server purchased by the tenant from the cloud platform.

It should be noted that the cloud program execution agent in embodiments of the present invention is set in the virtual machine, the container, and the bare metal server. The cloud program execution unit 20 may communicate with the cloud program execution agent, to control the virtual machine, the container, and the bare metal server to execute the cloud program code.

Therefore, in embodiments of the present invention, a compilation technology enables a developer to keep a programming habit, and further the developer can directly use, in a programming process, computing power provided by a cloud environment, so that complex programming does not need to be learned, and subsequent design and development of an entire distributed system do not need to be performed.

Further, refer to FIG. 12. FIG. 12 is a schematic diagram of an apparatus structure of a computer device according to an embodiment of the present invention. As shown in FIG. 12, the computer device includes a processor 1001, a memory 1002, a communication interface 1003, and a bus 1004. The processor 1001, the memory 1002, and the communication interface 1003 are separately connected to the bus 1004. The memory 1002 is configured to store computer-executable instructions, and the processor 1001 is configured to execute the computer-executable instructions stored in the memory 1002, to enable the computer device to implement the method performed by the cloud platform in Embodiment 1 and/or Embodiment 2.

In addition, an embodiment of the present invention further provides a computer storage medium, including computer-readable instructions. When the computer-readable instructions are executed, the method performed by the cloud platform in Embodiment 1 and/or Embodiment 2 is implemented.

An embodiment of the present invention further provides a computer program product including instructions. When the computer program product runs on a computer, the computer is enabled to perform the method performed by the cloud platform in Embodiment 1 and/or Embodiment 2.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, all or some of the procedures or functions in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A cloud service-based program code processing method, comprising:
Obtaining, by a cloud platform, program code of a tenant, wherein the program code comprises a first tag and subroutine code, and the first tag is used to indicate configuration information of a virtual instance running the subroutine code;
creating or selecting, by the cloud platform, one or more first virtual instances based on the first tag;
separately sending, by the cloud platform, the subroutine code to the one or more first virtual instances; and
receiving, by the cloud platform, one or more first running result obtained by separately running the subroutine code by the one or more first virtual instances.

2. The method according to claim 1, wherein the configuration information comprises a virtual instance specification.

3. The method according to claim 1 or 2, wherein the configuration information comprises a virtual instance type, and the virtual instance type is used to indicate any one of a virtual machine, a container, and a bare metal server.

4. The method according to any one of claims 1 to 3, wherein the configuration information comprises a virtual instance number N, and N is a positive integer.

5. The method according to any one of claims 1 to 4, wherein there are a plurality of first virtual instances, and the subroutine code is used to indicate the plurality of first virtual instances each to obtain different to-be-processed data from a shared storage space and perform data processing on the obtained to-be-processed data.

6. The method according to any one of claims 1 to 5, wherein the program code further comprises nested program code and a second tag, the second tag is used to indicate configuration information of a virtual instance running the nested program code, the nested program code is invoked by the subroutine code, and the method further comprises:
creating or selecting, by the cloud platform, one or more second virtual instances based on the second tag, and separately sending the nested program code to the one or more second virtual instances; and
receiving, by the cloud platform, one or more second running result obtained by separately running the nested program code by the one or more second virtual instances, and sending the second running result to the first virtual instance.

7. The method according to any one of claims 1 to 6, wherein the program code further comprises main program code, the subroutine code is invoked by the main program code, and the method further comprises:
requesting, by the cloud platform, the first running result from the one or more first virtual instances when running the main program code to a location at which the subroutine code needs to be invoked; and
continuing, by the cloud platform, running the main program code based on the first running result.

8. The method according to any one of claims 1 to 7, wherein the method further comprises:
providing, by the cloud platform, an upload interface, wherein the upload interface is configured to receive the program code uploaded by the tenant; or providing, by the cloud platform, a program editing screen, wherein the program editing screen is configured to receive the program code remotely input by the tenant.

9. The method according to any one of claims 1 to 8, wherein the method further comprises:
providing, by the cloud platform, a cloud service, and setting a cloud service application programming interface API for the cloud service, wherein the cloud service API is set in the subroutine code, and the cloud service API is configured to invoke the cloud service provided by the cloud platform.

10. The method according to claim 9, wherein the cloud service API comprises one or any combination of an object storage service API, a database service API, a shared cache service API, and a message queue service API.

11. The method according to any one of claims 1 to 10, wherein the first tag is an annotation of the subroutine code; or the first tag is program code that uses a predetermined syntax and that is adjacent to the subroutine code.

12. A cloud service-based program code processing method, comprising:
receiving, by a cloud platform, subroutine code and a first tag that are sent by a service virtual instance running main program code, wherein the subroutine code is invoked by the main program code, and the first tag is used to indicate configuration information of a virtual instance running the subroutine code;
creating or selecting, by the cloud platform, one or more first virtual instances based on the first tag;
sending, by the cloud platform, the subroutine code to the one or more first virtual instances; and
receiving, by the cloud platform, one or more first running result obtained by separately running the subroutine code by the one or more first virtual instances, and sending the first running result to the service virtual instance.

13. The method according to claim 12, wherein the configuration information indicated by the first tag comprises one or any combination of a virtual instance specification, a virtual instance type, and a virtual instance number N, N is a positive integer, and the virtual instance type is used to indicate any one of a virtual machine, a container, and a bare metal server.

14. The method according to claim 12 or 13, wherein the method further comprises:
receiving, by the cloud platform, nested program code and a second tag that are sent when the service virtual instance runs, wherein the second tag is used to indicate configuration information of a virtual instance running the nested program code, and the nested program code is invoked by the subroutine code;
creating or selecting, by the cloud platform, one or more second virtual instances based on the second tag, and sending the nested program code to the one or more second virtual instances; and
obtaining, by the cloud platform from the one or more second virtual instances, a second running result generated by running the nested program code by the one or more second virtual instances, and sending the second running result to the first virtual instance.

15. The method according to any one of claims 12 to 14, wherein the first tag is an annotation of the subroutine code; or the first tag is program code that uses a predetermined syntax and that is adjacent to the subroutine code.

16. A cloud platform, comprising:
a cloud service providing unit, configured to obtain program code of a tenant, wherein the program code comprises a first tag and subroutine code, and the first tag is used to indicate configuration information of a virtual instance running the subroutine code; and
a cloud program execution unit, configured to: create or select one or more first virtual instances based on the first tag, separately send the subroutine code to the one or more first virtual instances, and receive a first running result obtained by separately running the subroutine code by the one or more first virtual instances.

17. The cloud platform according to claim 16, wherein the configuration information indicated by the first tag comprises a virtual instance specification.

18. The cloud platform according to any one of claims 16 and 17, wherein the configuration information indicated by the first tag comprises a virtual instance type.

19. The cloud platform according to any one of claims 16 to 18, wherein the configuration information indicated by the first tag comprises a virtual instance number N, and N is a positive integer; and
the cloud program execution unit is configured to configure N first virtual instances.

20. The cloud platform according to any one of claims 16 to 19, wherein there are a plurality of first virtual instances, and the subroutine code is used to indicate the plurality of first virtual instances each to obtain different to-be-processed data from a shared storage space and perform data processing on the obtained to-be-processed data.

21. The cloud platform according to any one of claims 16 to 20, wherein the program code further comprises nested program code and a second tag, the second tag is used to indicate configuration information of a virtual instance running the nested program code, and the nested program code is invoked by the subroutine code; and
the cloud program execution unit is further configured to: configure one or more second virtual instances based on the second tag, separately send the nested program code to the one or more second virtual instances, receive a second running result obtained by separately running the nested program code by the one or more second virtual instances, and send the second running result to the first virtual instance.

22. The cloud platform according to any one of claims 16 to 21, wherein the program code further comprises main program code, the subroutine code is invoked by the main program code, and the cloud platform further comprises a main program execution unit;
the cloud program execution unit requests the first running result from the one or more first virtual instances when the main program execution unit runs the main program code to a location at which the subroutine code needs to be invoked; and
the main program execution unit continues running the main program code based on the first running result.

23. The cloud platform according to any one of claims 16 to 22, wherein
the cloud service providing unit is configured to provide an upload interface, and the upload interface is configured to receive the program code uploaded by the tenant; or the cloud service providing unit is configured to provide a program editing screen, and the program editing screen is configured to receive the program code remotely input by the tenant.

24. The cloud platform according to any one of claims 16 to 23, wherein
the cloud service providing unit is configured to provide a cloud service, and set a cloud service application programming interface API for the cloud service, the cloud service API is set in the program code, and the cloud service API is configured to invoke the cloud service provided by the cloud service providing unit.

25. The cloud platform according to claim 24, wherein the cloud service API comprises one or any combination of an object storage service API, a database service API, a shared cache service API, and a message queue service API.

26. The cloud platform according to any one of claims 16 to 25, wherein the first tag is an annotation of the program code, or the first tag is program code that uses a predetermined syntax and that is adjacent to the program code.

27. A cloud platform, comprising:
a cloud service providing unit, configured to create a service virtual instance, wherein the service virtual instance is used to run main program code;
a cloud program execution unit, configured to receive subroutine code and a first tag that are sent by the service virtual instance, wherein the subroutine code is invoked by the main program code, and the first tag is used to indicate configuration information of a virtual instance running the subroutine code; and
a cloud program execution unit, further configured to: create or select one or more first virtual instances based on the first tag, send the subroutine code to the one or more first virtual instances, receive a first running result obtained by separately running the subroutine code by the one or more first virtual instances, and send the first running result to the service virtual instance.

28. The cloud platform according to claim 27, wherein the configuration information indicated by the first tag comprises one or any combination of a virtual instance specification, a virtual instance type, and a virtual instance number N, N is a positive integer, and the virtual instance type is used to indicate any one of a virtual machine, a container, and a bare metal server.

29. The cloud platform according to claim 27 or 28, wherein the cloud program execution unit is configured to: receive nested program code and a second tag that are sent by the service virtual instance, wherein the second tag is used to indicate configuration information of a virtual instance running the nested program code, and the nested program code is invoked by the subroutine code; create or select one or more second virtual instances based on the second tag, and send the nested program code to the one or more second virtual instances; and obtain, from the one or more second virtual instances, a second running result generated by running the nested program code by the one or more second virtual instances, and send the second running result to the first virtual instance.

30. The cloud platform according to claim 27 or 28, wherein the first tag is an annotation of the subroutine code; or the first tag is program code that uses a predetermined syntax and that is adjacent to the subroutine code.

31. A computer device, wherein the computer device comprises a processor and a memory;
the memory is configured to store computer-executable instructions; and
the processor is configured to execute the computer-executable instructions stored in the memory, to enable the computer device to implement the method according to any one of claims 1 to 11 or the method according to any one of claims 12 to 15.

32. A computer storage medium, comprising computer-readable instructions, wherein when the computer-readable instructions are executed, the method according to any one of claims 1 to 11 or the method according to any one of claims 12 to 15 is implemented.

33. A computer program product comprising instructions, wherein when the computer program product runs on a computer, the computer is enabled to perform the method according to any one of claims 1 to 11 or the method according to any one of claims 12 to 15.
